# EUROPEAN PATENT APPLICATION

(11) **EP 1 542 381 A2**
(43) Date of publication of application: **15.06.2005**
(21) Application number: 04029196.5
(22) Date of filing: 09.12.2004
(51) Int. Cl.: H04H 9/00

(54) **Viewing information collecting system, viewing information collecting server, and portable terminal**

(30) Priority: 12.12.2003 JP 2003415109
(71) Applicant: NEC Electronics Corporation, Kawasaki, Kanagawa 211-8668 (JP)
(72) Inventor: Matsukawa, Shuuji, Nakahara-ku Kawasaki Kanagawa (JP)
(74) Representative: Glawe, Delfs, Moll & Partner

(57) **Abstract**

A viewing information collecting system includes a terminal (100) and a server (230). The terminal (100) outputs a broadcast program to be viewed, and generates viewing state information indicating a state that the broadcast program is viewed. The server (240) retrieves subscriber information corresponding to ID information of the terminal from a subscriber database (241), and generates viewing analysis information in which some of the subscriber information is related to the viewing state information. Here, the subscriber database (241) relates subscriber information to ID information.

## Description

### Background of the Invention

### 1. Field of the Invention

The present invention relates to a viewing information collecting system. More particularly, the present invention relates to a viewing information collecting system for collecting viewing information (regarding visual data and/or audio data) of content of television programs and the like viewed by a portable terminal.

### 2. Description of the Related Art

In a case of a conventional audience rating survey of an analog ground wave television, an apparatus for surveying an audience rating is installed in a television placed in a private home. Then, the information of viewed channels and the information of that viewing time are collected to survey.

However, in the case of the conventional audience rating survey of the analog ground wave television, targets for collecting the information are the television broadcast viewed in the private home. Thus, it is impossible to specify the viewer actually viewing the broadcast on the channel, in the family of the private home where the apparatus is installed. Hence, it is impossible to obtain the information of the gender, the age group, the job description and the like of the viewer viewing the broadcast on the channel.

In the service of the portable terminal in recent ages, the service to transmit the television broadcast to the portable terminal has been carried out. Several techniques for collecting the viewing information are proposed. These techniques are targeted on the portable terminal that can view such the television broadcast. For example, in Japanese Laid Open Patent Application JP-A 2002-232604, the portable terminal receives a menu screen and an image advertisement transmitted by using the ground wave digital broadcast. The portable terminal, after viewing the image advertisement selected from the menu screen, transmits the information indicative of viewing this image advertisement, together with the telephone number of the portable terminal, to an image advertisement service provider. The image advertisement service provider obtains the personal information from a subscriber personal information of a communication common carrier, based on the telephone number of the portable terminal viewing the image advertisement. Then, the image advertisement service provider transmits the telephone number and personal information of the portable terminal to each communication common carrier.

In the technique disclosed in JP-A 2002-232604, the information indicative of viewing the image advertisement is transmitted to the image advertisement company. Here, this image advertisement is a target for the return of a communication fee. Thus, the viewing history managed by the image advertisement company is the viewing history only for the image advertisement which is selected and viewed in order to return the communication fee. It is not the information used for the audience rating survey. Thus, it is impossible to collect the viewing information used for the audience rating survey.

Moreover, in the technique of JP-A 2002-232604, the viewing history is managed by the advertisement company, and the personal information is managed by the communication common carrier. Thus, the labor to manage the data and the management cost become excessive.

Moreover, the advertisement company needs the excessive labor to prepare the data of the viewing history, because the personal information managed by the communication common carrier is transferred, each time the viewing result is transmitted from the portable terminal.

Also, when the communication common carrier transfers the personal information, this personal information may be possibly leaked to exterior.

### Summary of the Invention

Therefore, an object of the present invention is to provide a viewing information collecting system for collecting the viewing information, which can accurately collect the viewing information of content viewed by the portable terminal, a viewing information collecting server and portable terminal of the same.

Another object of the present invention is to provide a viewing information collecting system for collecting the viewing information, which can reduce labors and costs to manage the personal information and the viewing history data, a viewing information collecting server and a portable terminal of the same.

Still another object of the present invention is to provide a viewing information collecting system for collecting the viewing information, which can reduce the labor and cost of the communication required to prepare the viewing history data, a viewing information collecting server and a portable terminal of the same.

Yet still another object of the present invention is to provide a viewing information collecting system for collecting the viewing information, which can avoid the external leakage induced in transferring the personal information and increase the security effect, a viewing information collecting server and a portable terminal of the same.

This and other objects, features and advantages of the present invention will be readily ascertained by referring to the following description and drawings.

In order to achieve an aspect of the present invention, the present invention provides a viewing information collecting system including a portable terminal and a viewing information collecting server. The portable terminal includes a memory unit, a viewing unit, a control unit and a first communication unit. The memory unit stores first terminal identification information identifying the portable terminal. The viewing unit receives content of a broadcast program as viewing content and outputs the viewing content to be viewed. The control unit generates first viewing state information indicating a state that the viewing content is viewed. The first communication unit transmits the first viewing state information and the first terminal identification information to the viewing information collecting server. The viewing information collecting server includes a second communication unit, a subscriber database and an analysis unit. The second communication unit receives the first viewing state information and the first terminal identification information from the portable terminal. The subscriber database relates a plurality of subscriber information to a plurality of terminal identification information identifying a plurality of portable terminals. The analysis unit retrieves first subscriber information corresponding to the first terminal identification information from the subscriber database, reads out predetermined first information in the first subscriber information and generates viewing analysis information in which the first information is related to the first viewing state information.

In the viewing information collecting system, the first viewing state information may include content identification information identifying the viewing content.

In the viewing information collecting system, the first viewing state information may further include viewing time when the viewing content is outputted to be viewed.

In the viewing information collecting system, the viewing content may include one of a television broadcast program, a radio broadcast program and a broadcast program in the Internet.

In order to achieve another aspect of the present invention, the present invention provides a viewing information collecting serverincluding a communication unit, a subscriber database and an analysis unit. The communication unit receives first viewing state information and first terminal identification information from a first portable terminal. The first viewing state information indicates a state that viewing content is outputted by the first portable terminal to be viewed. The viewing content is content of a broadcast program and is received by the first portable terminal. The first terminal identification information identifies the first portable terminal. The subscriber database relates a plurality of subscriber information to a plurality of terminal identification information identifying a plurality of portable terminals. The analysis unit retrieves first subscriber information corresponding to the first terminal identification information from the subscriber database. The analysis unit reads out predetermined first information in the first subscriber information and generates viewing analysis information in which the first information is related to the first viewing state information.

In the viewing information collecting serve, the first viewing state information may include content identification information identifying the viewing content.

In the viewing information collecting server, the first viewing state information may further include viewing time when the viewing content is outputted to be viewed.

In the viewing information collecting server, the analysis unit may judges whether or not the first viewing state information includes viewing time when the viewing content is outputted to be viewed. If judging that the viewing time does not include, the analysis unit may generate the viewing analysis information. The first information, the first viewing state information and receiving time are related to each other in the viewing analysis information. The receiving time is time when the first viewing state information is received.

In the viewing information collecting server, the viewing content may include one of a television broadcast program, a radio broadcast program and a broadcast program in the Internet.

In the viewing information collecting server, the analysis unit may include a position information obtaining unit which obtains position information indicating a position where the first portable terminal outputs the viewing content to be viewed.

In the viewing information collecting server, the position information obtaining unit may obtain the position information based on identification information of a base station. The base station manages a communication in an area where the first portable terminal exists.

In the viewing information collecting server, the position information obtaining unit may obtain the position information based on second information transmitted from the first portable terminal. The second information indicates a position where the first portable terminal exists.

The viewing information collecting server may further include a fee database and an accounting control unit. The fee database stores communication fee information indicating a communication fee of the first portable terminal. The accounting control unit reduces the communication fee in the fee database based on the first viewing state information.

In order to achieve another aspect of the present invention, the present invention provides a portable terminal including a memory unit, a viewing unit, a control unit and a communication unit. The memory unit stores first terminal identification information identifying the portable terminal. The viewing unit receives content of a broadcast program as viewing content and outputs the viewing content to be viewed. The control unit generates first viewing state information indicating a state that the viewing content is viewed. The communication unit transmits the first viewing state information and the first terminal identification information to a viewing information collecting server of a communication carrier.

In the portable terminal, the first viewing state information may include content identification information identifying the viewing content.

In the portable terminal, the first viewing state information may further include viewing time when the viewing content is outputted to be viewed.

In the portable terminal, the viewing content may include one of a television broadcast program, a radio broadcast program and a broadcast program in the Internet.

In the portable terminal, the communication unit may transmit the first viewing state information and the first terminal identification to the viewing information collecting server, whenever the control unit generates the first viewing state information.

In the portable terminal, the communication unit may transmit the first viewing state information to the viewing information collecting server, every predetermined amount of the first viewing state information.

In the portable terminal, the communication unit may transmit the first viewing state information to the viewing information collecting server, in response to a transmission request signal of the first viewing state information outputted from the viewing information collecting server.

In the portable terminal, the communication unit may transmit the first viewing state information to the viewing information collecting server at a predetermined time.

The portable terminal may further include a position obtaining unit which obtains position information indicating a position where the portable terminal exists. The communication unit may transmit the position information to the viewing information collecting server.

In order to achieve another aspect of the present invention, the present invention provides a method for collecting viewing information, including: (a) outputting a viewing content to be viewed, by a first portable terminal, wherein the viewing content is content of a broadcast program and is received by the first portable terminal; (b) generating first viewing state information indicating a state that the viewing content is viewed, by the first portable terminal; (c) transmitting the first viewing state information and first terminal identification information to a viewing information collecting server, by the first portable terminal, wherein the first terminal identification information identifies the first portable terminal; (d) receiving the first viewing state information and the first terminal identification information from the portable terminal, by the viewing information collecting server; and (e) retrieving first subscriber information corresponding to the first terminal identification information from a subscriber database, reading out predetermined first information in the first subscriber information and generating viewing analysis information in which the first information is related to the first viewing state information, by the viewing information collecting server. The subscriber database relates a plurality of subscriber information to a plurality of terminal identification information identifying a plurality of portable terminals.

In the method for collecting viewing information according to claim 23, wherein the step (b) may include (b1) generating the first viewing state information such that the first viewing state information includes content identification information identifying the viewing content, by the first portable terminal.

In the method for collecting viewing information, the step (b) may include (b2) generating the first viewing state information such that the first viewing state information further includes viewing time when the viewing content is outputted to be viewed, by the first portable terminal.

In the method for collecting viewing information, the viewing content may include one of a television broadcast program, a radio broadcast program and a broadcast program in the Internet.

In order to achieve another aspect of the present invention, the present invention provides a method for operating a viewing information collecting server which is used for collecting viewing information, the method including: (f) receiving first viewing state information and first terminal identification information from a first portable terminal, wherein the first viewing 'state information indicates a state that viewing content is outputted by the first portable terminal to be viewed, the viewing content is content of a broadcast program and is received by the first portable terminal, the first terminal identification information identifies the first portable terminal; (g) retrieving first subscriber information corresponding to the first terminal identification information from a subscriber database; (h) reading out predetermined first information in the first subscriber information; and (i) generating viewing analysis information in which the first information is related to the first viewing state information. The subscriber database relates a plurality of subscriber information to a plurality of terminal identification information identifying a plurality of portable terminals.

In the method for operating the viewing information collecting server, the first viewing state information may include content identification information identifying the viewing content.

In the method for operating the viewing information collecting server, the first viewing state information may further include viewing time when the viewing content is outputted to be viewed.

In the method for operating the viewing information collecting server, the step (i) may include: (i1) judging whether or not the first viewing state information includes viewing time when the viewing content is outputted' to be viewed, and (i2) generating the viewing analysis information in which the first information, the first viewing state information and receiving time are related to each other, if judging that the viewing time does not included in the first viewing state information. The receiving time is time when the first viewing state information is received.

In the method for operating the viewing information collecting server, the viewing content may include one of a television broadcast program, a radio broadcast program and a broadcast program in the Internet.

In the method for operating the viewing information collecting server, the step (i) may include: (i3) obtaining position information indicating a position where the first portable terminal outputs the viewing content to be viewed, and (i4) generating the viewing analysis information in which the position information is related to at least of the first information and the first viewing state information.

In the method for operating the viewing information collecting server, the step (i3) may includes: (i31) obtaining the position information based on identification information of a base station, the base station manages a communication in an area where the first portable terminal exists.

In The method for operating the viewing information collecting server, the step (i3) may include: (i32) obtaining the position information based on second information transmitted from the first portable terminal, the second information indicates a position where the first portable terminal exists.

In the method for operating the viewing information collecting server may further includes (j) reducing a communication fee in a fee database based on the first viewing state information. The fee database stores communication fee information indicating the communication fee of the first portable terminal.

In order to achieve another aspect of the present invention, the present invention provides a method for operating a portable terminal which is used for collecting viewing information, the method including: (k) outputting a viewing content to be viewed, wherein the viewing content is received content of a broadcast program; (1) generating first viewing state information indicating a state that the viewing content is viewed; and (m) transmitting the first viewing state information and first terminal identification information to a viewing information collecting server of a communication carrier, wherein the first terminal identification information identifying the portable terminal.

In the method for operating the portable terminal, the step (1) may include: (11) obtaining content identification information from the viewing content to be included in the first viewing state information. The content identification information identifies the viewing content.

In the method for operating the portable terminal, the step (1) may include: (12) obtaining viewing time to be included in the first viewing state information, wherein the viewing time is time when the viewing content is outputted to be viewed.

In the method for operating the portable terminal, the viewing content may include one of a television broadcast program, a radio broadcast program and a broadcast program in the Internet.

In the method for operating the portable terminal, the step (m) may include (m1) transmitting the first viewing state information and the first terminal identification to the viewing information collecting server, whenever the first viewing state information is generated.

In the method for operating the portable terminal, the step (m) may include: (m2) transmitting the first viewing state information to the viewing information collecting server, every predetermined amount of the first viewing state information.

In the method for operating the portable terminal, the step (m) may include: (m3) transmitting the first viewing state information to the viewing information collecting server, in response to a transmission request signal of the first viewing state information outputted from the viewing information collecting server.

In the method for operating the portable terminal, the step (m) may include: (m4) transmitting the first viewing state information to the viewing information collecting server at a predetermined time.

In the method for operating the portable terminal, the step (m) may include: (m5) obtaining position information indicating a position where the portable terminal exists, and (m6) transmitting the position information to the viewing information collecting server.

In order to achieve another aspect of the present invention, the present invention provides a computer program product with program code means for carrying out all steps of each of the above-described methods if the program runs on a computer.

In order to achieve another aspect of the present invention, the present invention provides a computer program product with program code means for carrying out all steps of each of the above-described methods which are stored on a storage means which can be read by the computer.

### Brief Description of the Drawings

Fig. 1 is a conceptual diagram showing the viewing information collecting system of the present invention;
Fig. 2 is a view showing a configuration of the viewing information collecting system in the first embodiment;
Fig. 3 is a table showing the viewing state information;
Fig. 4 is a table showing the contents of the subscriber information database 241;
Fig. 5 is a table showing the contents of the position information database 242;
Fig. 6 is a flowchart showing the operation carried out by the portable terminal 100 in the first embodiment;
Fig. 7 is a flowchart showing the operation executed by the communication common carrier system 200 in the first embodiment;
Fig. 8 is view showing a configuration of the viewing information collecting system in the second embodiment;
Fig. 9 is a flowchart showing the operation executed by the portable terminal 100 in the second embodiment;
Fig. 10 is a flowchart showing the operation executed by the communication common carrier system 200 in the second embodiment;
Fig. 11 is a flowchart showing the operation executed by the portable terminal 100 in the third embodiment;
Fig. 12 is a flowchart showing the operation executed by the communication common carrier system 200 in the third embodiment;
Fig. 13 is view showing a configuration of the viewing information collecting system in the fourth embodiment;
Fig. 14 is a flowchart showing the operation executed by the portable terminal 100 in the fourth embodiment;
Fig. 15 is a view showing the configuration of the viewing information collecting system in the fifth embodiment;
Fig. 16 is a flowchart showing the operation executed by the portable terminal 100 in the fifth embodiment;
Fig. 17 is a flowchart showing the operation for the position registration in the sixth embodiment;
Fig. 18 is a flowchart showing the operation executed by the communication common carrier system 200 in the sixth embodiment;
Fig. 19 is a view showing a configuration of the viewing information collecting system in seventh embodiment;
Fig. 20 is a table showing the viewing state information;
Fig. 21 is a table showing the contents of the fee database 247;
Fig. 22 is a flowchart showing the operation executed by the portable terminal 100 in the seventh embodiment; and
Fig. 23 is a flowchart showing the operation executed by the communication common carrier system 200 in the seventh embodiment.

### Description of the Preferred Embodiments

Embodiments of a viewing information collecting system, a viewing information collecting server and a portable terminal according to the present invention will be described below with reference to the attached drawings.

In the present invention, a portable terminal transmits the terminal identification information for identifying the portable terminal and the information of television broadcasts viewed by this portable terminal. Then, based on the transmitted terminal identification information, a viewing information collecting server retrieves the subscriber information of the portable terminal. The viewing information collecting server prepares the viewing information from the information of the television broadcasts transmitted from the portable terminal and the retrieved subscriber information. Moreover, the viewing information collecting server provides even a position where the portable terminal views the television broadcasts.

### [First Embodiment]

The first embodiment of the present invention will be described below with reference to the attached drawings.

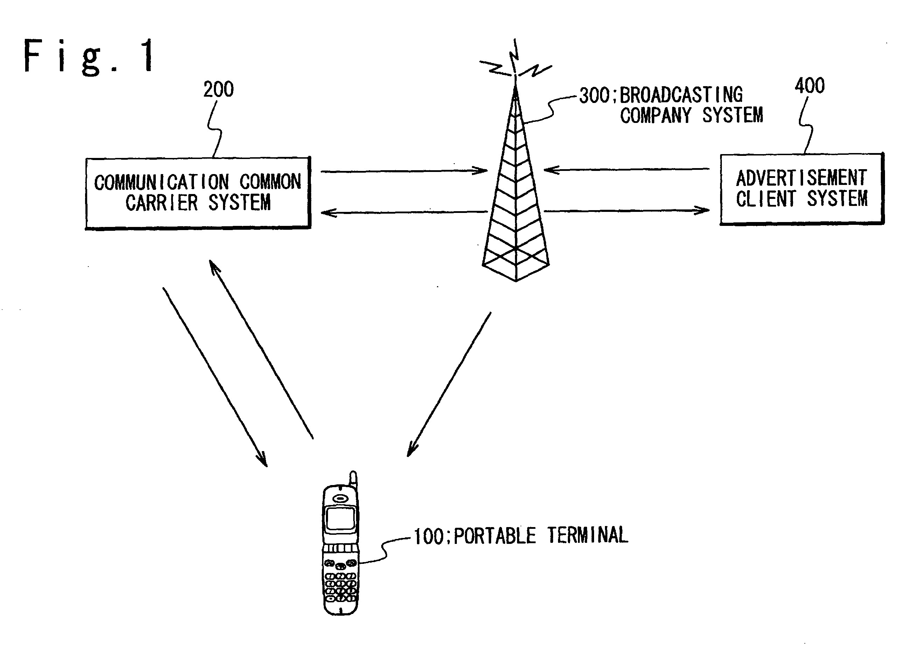

Fig. 1 is a conceptual diagram showing the viewing information collecting system of the present invention. The viewing information collecting system includes a portable terminal 100, a communication common carrier system 200 and a broadcasting company system 300. The communication common carrier system 200 belongs to the communication common carrier, and provides a mobile communication service to the portable terminal 100. The broadcasting company system 300 belongs to the broadcasting company, and provides a television broadcast to the portable terminal 100. The broadcasting company system 300 is related to an advertisement client system 400. The advertisement client system 400 belongs to the advertisement client, and provides the advertisement to the broadcasting company system 300.

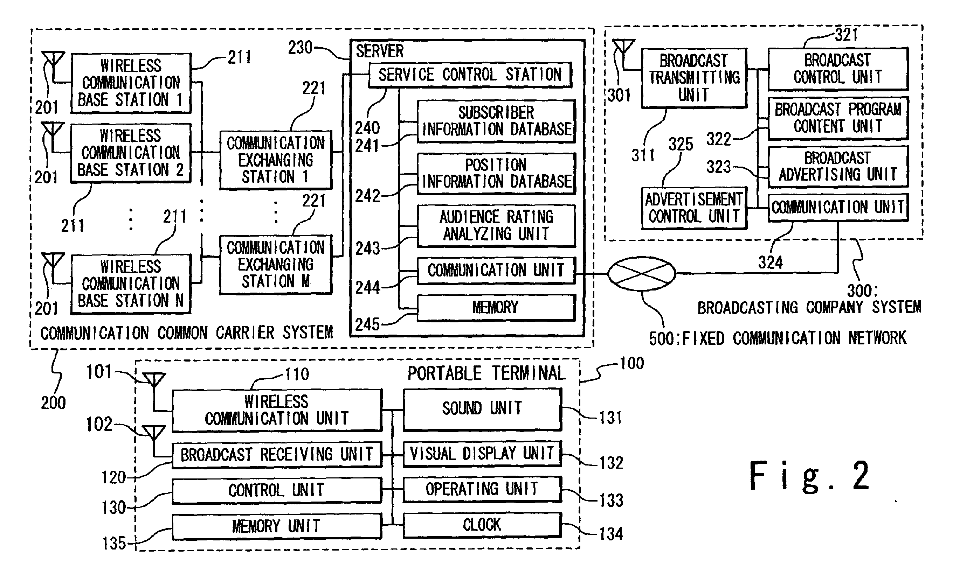

Fig. 2 is a view showing a configuration of the viewing information collecting system in the first embodiment.

The configuration of the portable terminal 100 will be described below. The portable terminal 100 is a portable (mobile) information processor such as a cell phone, a PDA (Personal Digital Assistant) and a laptop (notebook) computer. The portable terminal 100 includes a wireless communication unit 110, an antenna 101, a broadcast receiving unit 120, an antenna 102, a control unit 130, an operating unit 133, a memory unit 135, a sound unit 131, a visual display unit 132, a clock 134.

The wireless communication unit 110 carries out a usual two-way communication with the communication common carrier system 200 through the antenna 101. For example, when a line control process is executed for wireless communication, a position registration signal is transmitted to a wireless communication base station of the communication common carrier system 200.

The broadcast receiving unit 120 receives a television broadcast through the antenna 102.

The control unit 130, when a channel is selected (changed) by the operating unit 133 after the startup of an application for receiving of the television broadcast, recognizes the selection of the channel, captures a current time information as a viewing start time. The control unit 130 relates the viewing start time to a channel identification information of the viewed channel. Then, the control unit 130 generates a viewing state information and stores it in a memory unit 135. Moreover, after a user of the portable terminal 100 finishes viewing of the television broadcast, the control unit 130 recognizes the finishing of viewing of the television broadcast. Then, the control unit 130 captures the current time information as the end time of viewing of the television broadcast. The control unit 130 relates the end time to the end time identification information indicating the end of the viewing (the end of the television broadcast reception). After that, the control unit 130 generates the viewing state information, and then stores in the memory unit 135. Also, the control unit 130 transmits the viewing state information and the terminal identification information through the wireless communication unit 110, each time it generates the viewing state information. Incidentally, in this embodiment, the end time identification information is assumed to be "999". However, this is not limited thereto.

The sound unit 131 carries out the sound input/output process of a communication signal which the wireless communication unit 110 transmits/receives through the antenna 101. Also, the sound unit 131 carries out the voice reproducing process of the television broadcast which the broadcast receiving unit 120 receives through the antenna 102.

The visual display unit 132 displays a picture corresponding to the communication signal. The communication signal is received by the wireless communication unit 110 through the antenna 101, as an operation screen on a screen. Also, the visual display unit 132 displays a broadcast picture, which the broadcast receiving unit 120 receives through the antenna 102, on the screen.

The operating unit 133 is used to carry out a control input/output process of the portable terminal 100 through a man machine interface. For example, the man machine interface is a button and a ten key. The portable terminal subscriber (the user of the portable terminal) uses the operating unit 133 to start or end the application for receiving television broadcast or to select the channel.

The clock 134 provides a time information to the control unit 130.

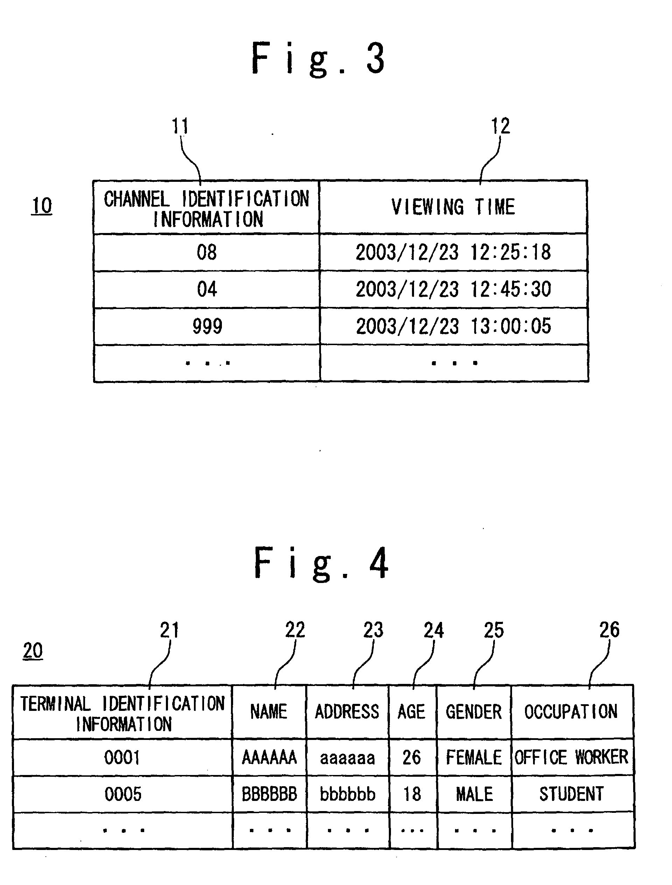

The memory unit 135 stores the terminal identification information to identify the portable terminal. Moreover, the memory unit 135 stores the viewing state information prepared by the control unit 130. Fig. 3 is a table showing the viewing state information. In this viewing state information 10, as shown in Fig. 3, one record is composed of the channel identification information 11 and the viewing time 12. The channel identification information 11 contains the identification information to identify the channel viewed by the portable terminal, or the end time identification information indicating the end of the viewing of the television broadcast (the end of the television broadcast reception). The viewing time 12 contains the time when the viewing of the channel is started or the time when the viewing of the channel is ended. Incidentally, in this embodiment, although the terminal identification information and the viewing state information 10 are stored in the same memory 135, the terminal identification information and the viewing state information 10 may be stored in the respectively different memories (not shown).

Next, The configuration of the communication common carrier system 200 will be described below. As shown in Fig. 2, the communication common carrier system 200 includes a wireless communication base station 211, a communication antenna 201, a communication exchanging station 221 and a server 230.

The wireless communication base station 211 is provided with a plurality of wireless communication base stations. The identification information to identify the wireless communication base station is assigned to each wireless communication base station. Also, the wireless communication base station 211 executes the communication process with the portable terminal 100 through the communication antenna 201.

The communication exchanging station 221 executes a line exchanging or packet exchanging process with an apparatus belonging to a different communication common carrier through a fixed network or between the respective portable terminals.

The communication antenna 201, wireless communication base station 211 and communication exchanging station 221 are the usual mobile communication network.

The server 230 is a information processor such as a workstation, a personal computer and a combination thereof. The server 230 includes a service control station 240, a subscriber information database 241, a position information database 242, an audience rating analyzing unit 243, a communication unit 244 and a memory 245.

The service control station 240 manages and controls the entire communication service. For example, the service control station 240 carries out the following process when the line control process for the wireless communication is executed. The service control station 240 retrieves the terminal identification information, which corresponds to the terminal identification information of the portable terminal transmitting the position registration signal, from the position information database 242. Then, the service control station 240 relates the retrieved terminal identification information to the identification information of the wireless communication base station 211 receiving the position registration signal transmitted from the portable terminal 100. After that, the service control station 240 stores them in the position information database 242 which will be described later.

Fig. 4 is a table showing the contents of the subscriber information database. The subscriber information database 241 manages the information with regard to the subscriber of the portable terminal 100. This is HLR (Home Location Register). This subscriber information 20 is composed of the terminal identification information 21, names 22, addresses 23, ages 24, genders 25, occupations 26 and the like.

The terminal identification information 21 is the identification information to identify the portable terminal and serve as a key code for retrieval, and this is equal to the terminal identification information stored in the memory unit 135. Incidentally, this first embodiment is explained such that it is equal to the terminal identification information stored in the memory unit 135. However, it may be not always equal. For example, it may be designed such that the terminal identification information stored in the memory unit 135 is defined as the peculiar information to identify the portable terminal, and the terminal identification information noted in the subscriber information database 241 is defined as a telephone number, and a device for substituting the peculiar information for the telephone number is placed between the portable terminal 100 and the server 30, and the subscriber information and the viewing state information are consequently related to each other.

The addresses 23, the ages 24, the genders 25 and the occupations 26 are the information registered at the time of the ueser's subscription to the communication service of the portable terminal 100. Incidentally, the subscriber information database 241 in this embodiment constitutes one record composed of the terminal identification information 21, the name 22, the address 23, the age 24, the gender 25 and the occupation 26. However, it is not limited thereto. Also, the subscriber information database 241 is updated so as to reflect the newest information of the subscriber. For example, the subscriber information database 241 is updated by adding 1 to the age for each arrival of the birthday of the subscriber.

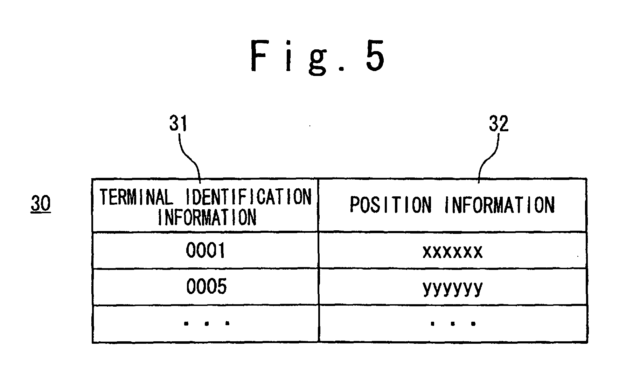

Fig. 5 is a table showing the contents of the position information database. The position information database 242 manages the position information indicating the position where the portable terminal 100 is located, and this is VLR (Visitor Location Register). In this position information 30, one record is composed of the terminal identification information 31 and the position information 32, and they are related to each other. The terminal identification information 31 is the terminal identification information given to the portable terminal 100. The position information 32 is the identification information of the wireless communication base station 211 receiving the position registration signal transmitted by the portable terminal 100 in the line control process of the wireless communication. The line control process is carried out in a usual cellular system. Also, as for this position information 32, in response to the movement of the portable terminal 100, its newest information is updated.

The audience rating analyzing unit 243 retrieves the terminal identification information corresponding to that terminal identification information from the subscriber information database 241, based on the terminal identification information received by the service control station 240. Moreover, the audience rating analyzing unit 243 reads out only the preset information, such as the residence territory which is a part of the address (the name of the prefecture, and the city, town or village), the age, the gender, the occupation and the like, from the subscriber information stored in relation to the retrieved terminal identification information. Then, the audience rating analyzing unit 243 relates the read preset information to the received viewing state information to prepares a real time viewing analysis information, and then stores it in the memory 245. Also, the audience rating analyzing unit 243 prepares a statistic viewing analysis information based on the real time viewing analysis information. This statistic viewing analysis information is, for example, the audience rating for each age, each occupation or each residence territory or the like.

The communication unit 244 carries out the communicating process with the broadcasting company system 300 through a fixed communication network 500, and transmits the real time viewing analysis information or the statistic viewing analysis information.

The memory 245 stores the real time viewing analysis information and the statistic viewing analysis information which are prepared by the audience rating analyzing unit 243.

Next, The configuration of the broadcasting company system 300 will be described below. As shown in Fig. 2, the broadcasting company system 300 is a information processor such as a workstation, a personal computer and a combination thereof. The broadcasting company system 300 includes a broadcast control unit 321, a broadcast program content unit 322, a broadcast advertising unit 323, a communication unit 324, an advertisement control unit 325, a broadcast transmitting unit 311 and an antenna 301.

The broadcast control unit 321 controls the entire television broadcast. The broadcast program content unit 322 has the content information (data) of broadcast programs. The broadcast advertising unit 323 has the content information of broadcast advertisements. The communication unit 324 receives the real time viewing analysis information and statistic viewing analysis information which are transmitted through the fixed communication network 500.

The advertisement control unit 325 judges the broadcast timing of the broadcast advertisement and instructs the broadcast control unit 321 to insert or overlap the advertisement into or with the broadcast program with precise timing. The broadcast control unit 321, while measuring the time, selects a broadcast program content and a broadcast advertisement content, transfers them to the broadcast transmitting unit 311 to perform the television broadcast on the portable terminal 100 through an antenna 301. Moreover, the broadcast control unit 321 requests the audience rating analysis service of the television broadcast, through the communication unit 324 to the communication common carrier system 200, and determines the specifications of the audience rating analysis.

The operation of the viewing information collecting system in this embodiment will be described below. At first, the operation of the transmission of the viewing state information, which is carried out by the portable terminal 100, is explained.

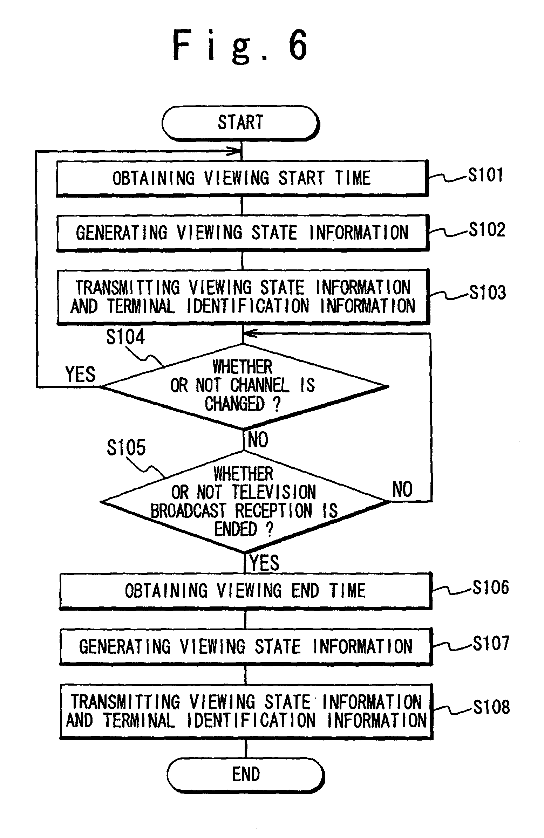

Fig. 6 is a flowchart showing the operation carried out by the portable terminal 100 in the first embodiment.

When the application for the television broadcast reception is started, the control unit 130 obtains the current time information as a viewing start time from the clock 134 (Step S101).

The control unit 130, when obtaining the viewing start time, generates the viewing state information from the viewing start time and the channel identification information indicating the viewed channel. Then, the control unit 130 stores the viewing state information in the memory unit 135 (Step S102).

The control unit 130 transmits the generated viewing state information together with the terminal identification information through the wireless communication unit 110 to the communication common carrier system 200 (Step S103).

Next, the control unit 130 recognizes whether or not the channel is changed (Step S104). If the control unit 130 recognizes the change of the channel, the operation flow returns to the step S101.

If the control unit 130 does not recognize the change of the channel, the control unit 130 recognizes whether or not the television broadcast reception is ended (Step S105). If the control unit 130 does not recognize the end of the television broadcast reception, the operation flow returns to the step S104.

If the control unit 130 recognizes the end of the television broadcast reception, the control unit 130 obtained the current time information as the viewing end time from the clock 134 (Step S106).

After obtaining the viewing end time, the control unit 130 generates the viewing state information from the viewing end time and the identification information indicating the viewing end, and stores the viewing state information in the memory unit 135 (Step S107).

The control unit 130 transmits the generated viewing state information together with the terminal identification information through the wireless communication unit 110 to the communication common carrier system 200 (Step S108).

As mentioned above, the process for transmitting the viewing state information is executed by the potable terminal 100.

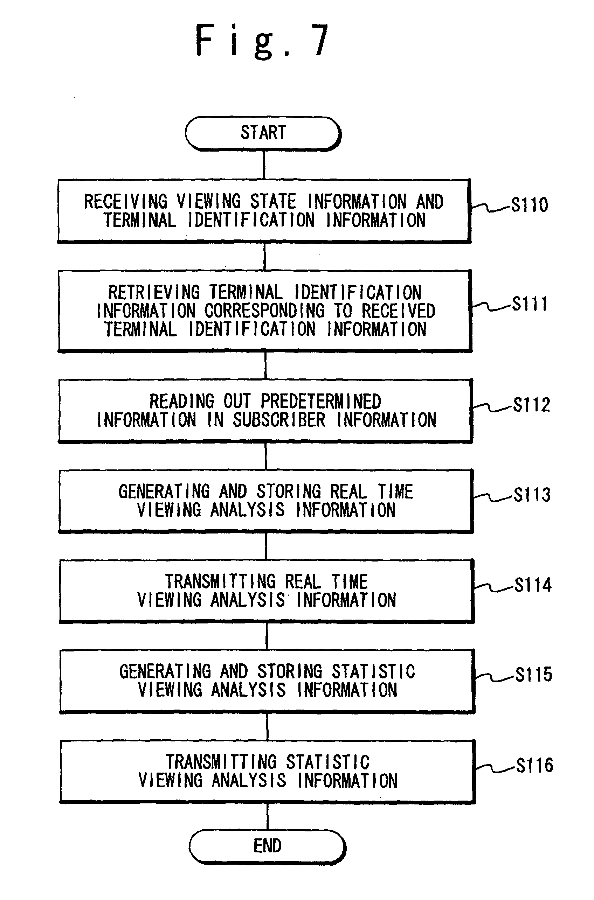

Next, the operation for generating the viewing analysis information will be described, which is the operation executed by the communication common carrier system 200. Fig. 7 is a flowchart showing the operation executed by the communication common carrier system 200 in the first embodiment.

When the portable terminal 100 transmits the viewing state information and the terminal identification information, the service control station 240 receives the viewing state information and the terminal identification information through the mobile communication network (Step S110).

When the service control station 240 receives the viewing state information and the terminal identification information, the audience rating analyzing unit 243 retrieves the terminal identification information corresponding to the received terminal identification information, from the subscriber information database 241 (Step S111).

When retrieving the terminal identification information from the subscriber information database 241, the audience rating analyzing unit 243 reads out the residence territory, age, gender and occupation of the portable terminal subscriber, which are stored in relation to this terminal identification information from the subscriber information database 241 (Step S112).

The audience rating analyzing unit 243 makes the read-out residence territory, age, gender and occupation of the portable terminal subscriber be related to the received viewing state information to generate the real time viewing analysis information. The audience rating analyzing unit 243 stores the real time viewing analysis information in the memory 245 (Step S113).

The service control station 240 transmits the real time viewing analysis information stored in the memory 245 through the communication unit 244 to the broadcasting company system 300 (Step S114).

Also, when the real time viewing analysis information is accumulated to predetermined level in the memory 245, the audience rating analyzing unit 243 generates the statistic viewing analysis information and stores it in the memory 245 (Step S115).

The service control station 240 transmits the stored statistic viewing analysis information through the communication unit 244 to the broadcasting company system 300 (Step S116).

According to the above-mentioned configuration, the broadcasting company system 300 can deduce the viewer group of each broadcast program based on the real time viewing analysis information and broadcast the advertisement matched with the most viewer group. Also, the broadcasting company system 300 can arrange the broadcast program based on the statistic viewing analysis information.

Incidentally, the subscriber information database 241 in this embodiment is installed in the server 230. However, it is not limited therein if it is located inside the communication common carrier system 200.

### [Second Embodiment]

A second embodiment in the present invention will be described below with reference to the attached drawings. In the first embodiment, the configuration is explained for obtaining the viewing start time and the viewing end time from the clock 134 placed in the portable terminal 100. However, if the time data is read out from the clock placed in the portable terminal 100, the set time is varied depending on the each of the portable terminals 100, which may possibly result in the reducing of the accuracy of the viewing analysis information.

In this second embodiment, the configuration is explained in which, whether or not the viewing time is included in the viewing state information transmitted from the portable terminal 100 is recognized, and if the viewing time is not included, the viewing start time and the viewing end time will be obtained from the clock placed in the server 230. Incidentally, the same numerals are given to the elements similar to those of the above-mentioned embodiment, and their detailed explanations are omitted. Also, it is basically similar to the configuration of the first embodiment. Thus, the explanation will be focused on points different from the first embodiment.

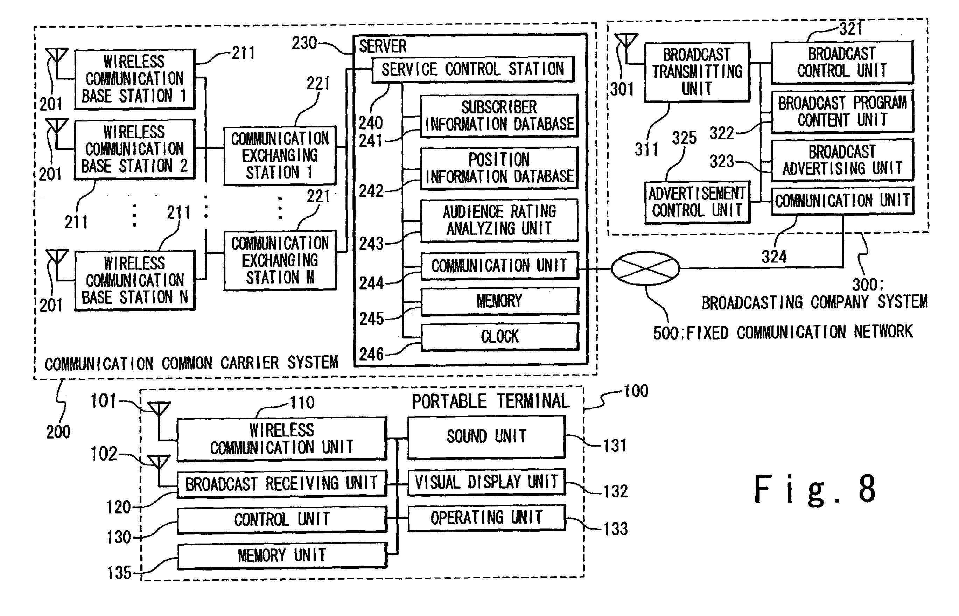

Fig. 8 is view showing a configuration of the viewing information collecting system in the second embodiment.

The point different from the first embodiment lies in the configuration that the server 230 has a clock 246, in addition to the configuration of the first embodiment.

After the start of the application for the television broadcast reception, when the operating unit 133 selects (changes) the channel, the control unit 130 recognizes that the channel is selected. Then, the control unit 130 stores the channel identification information of the channel being viewed, as the viewing state information in the memory unit 135. Moreover, when the television broadcast reception is ended, the control unit 130 recognizes the end of the television broadcast reception, and stores the identification information indicating the end of the viewing, as the viewing state information in the memory unit 135. Also, each time the viewing state information is generated, the control unit 130 transmits the viewing state information and the terminal identification information through the wireless communication unit 110.

As explained in the first embodiment, based on the terminal identification information received by the service control station 240, the audience rating analyzing unit 243 retrieves the terminal identification information corresponding to that terminal identification information from the subscriber information database 241. Then, the audience rating analyzing unit 243 reads out only the preset information from the subscriber information stored in relation to the retrieved terminal identification information. Moreover, when receiving the viewing state information, the audience rating analyzing unit 243 recognizes whether or not the viewing time is included in the viewing state information. If the viewing time is not included, the audience rating analyzing unit 243 reads out the time information from the clock 246. Then, the audience rating analyzing unit 243 relates the read-out subscriber information, the time when the viewing state information is received, and the received viewing state information, and generates and stores the real time viewing analysis information. The clock 246 provides the time information to the audience rating analyzing unit 243.

The operation of the viewing information collecting system in this embodiment will be described below with reference to attached drawings. At first, the operation of the transmission of the viewing state information executed in the portable terminal 100 will be explained.

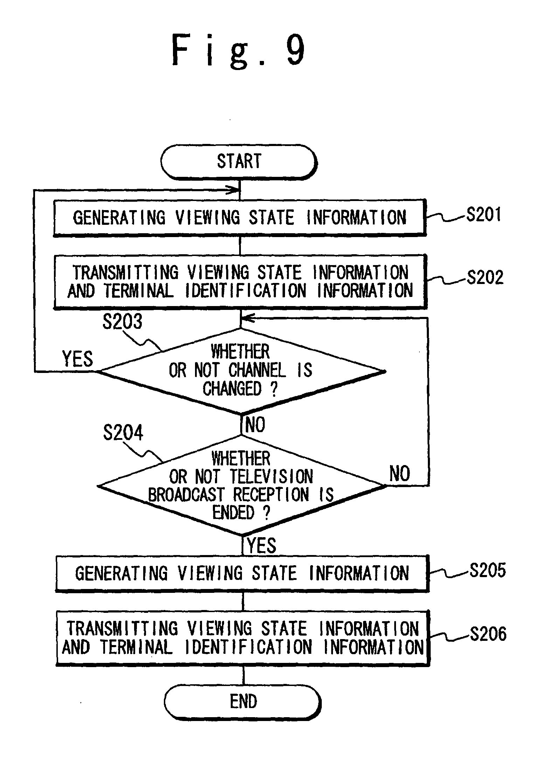

Fig. 9 is a flowchart showing the operation executed by the portable terminal 100 in the second embodiment.

When the application of the television broadcast reception is started, the control unit 130 stores the channel identification information being viewed, as the viewing state information in the memory unit 135 (Step S201).

The control unit 130 transmits the generated viewing state information together with the terminal identification information through the wireless communication unit 110 to the communication common carrier system 200 (Step S202).

The control unit 130 recognizes whether or not the channel is changed (Step S203). Here, if the channel is changed, the operation flow returns to the step S201.

On the one hand, if the channel is not changed, the control unit 130 recognizes whether or not the television broadcast reception is ended (Step S204). Here, if the television broadcast reception is not ended, the operation flow returns to the step S203.

On the other hand, if the television broadcast reception is ended, the control unit 130 stores the identification information indicating the viewing end as the viewing state information in the memory unit 135 (Step S205).

The control unit 130 transmits the generated viewing state information together with the terminal identification information through the wireless communication unit 110 to the communication common carrier system 200 (Step S206).

As mentioned above, the process for transmitting the viewing state information is executed.

Next, the operation for generating the viewing analysis information is explained which is the operation executed by the communication common carrier system 200.

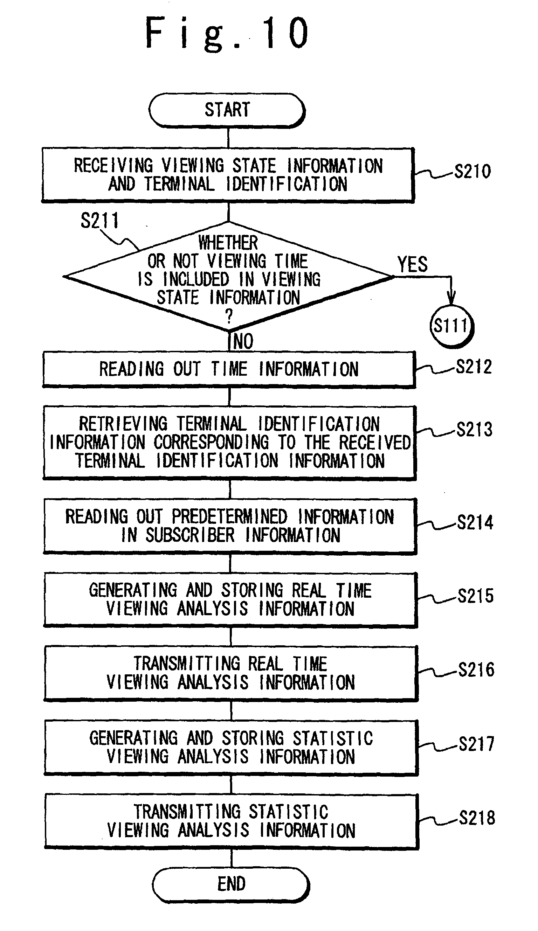

Fig. 10 is a flowchart showing the operation executed by the communication common carrier system 200 in the second embodiment.

When the portable terminal 100 transmits the viewing state information and the terminal identification information, the service control station 240 receives the viewing state information and the terminal identification information through the mobile communication network (Step S210).

When the service control station 240 receives the viewing state information and the terminal identification information, the audience rating analyzing unit 243 recognizes whether or not the viewing time is included in the received viewing state information (Step S211).

If recognizing that the time information is included in the received viewing state information, the audience rating analyzing unit 243 carries out the processes from the step S111 of the first embodiment (shown in Fig. 7). On the other hand, if recognizing that the time information is not included in the received viewing state information, the audience rating analyzing unit 243, reads out the time information from the clock 246 (Step S212).

Next, the audience rating analyzing unit 243 retrieves the terminal identification information corresponding to the received terminal identification information, from the subscriber information database 241 (Step S213).

When retrieving the terminal identification information from the subscriber information database 241, the audience rating analyzing unit 243 reads out the residence territory, age, gender and occupation of the portable terminal subscriber, which are stored in relation to this terminal identification information (Step S214).

The audience rating analyzing unit 243 makes the read-out residence territory, age, gender and occupation of the portable terminal subscriber be related to the time information and the received viewing state information to generate the real time viewing analysis information. The audience rating analyzing unit 243 stores the real time viewing analysis information in the memory 245 (Step S215).

The service control station 240 transmits the real time viewing analysis information stored in the memory 245 through the communication unit 244 to the broadcasting company system 300 (Step S216).

Also, when the real time viewing analysis information is accumulated to the predetermined level in the memory 245, the audience rating analyzing unit 243 generates the statistic viewing analysis information. The audience rating analyzing unit 243 stores the statistic viewing analysis information in the memory 245 (Step S217).

The service control station 240 transmits the stored statistic viewing analysis information through the communication unit 244 to the broadcasting company system 300 (Step S218).

As mentioned above, due to the configuration in which the time information is added on the communication common carrier system, the viewing time does not depend on the respective portable terminals. Thus, the precision of the viewing analysis information can be increased.

Incidentally, the subscriber information database 241 in this embodiment is installed in the server 230. However, it is not limited therein if it is located inside the communication common carrier system 200.

### [Third Embodiment]

The third embodiment in the present invention will be described below with reference to attached drawings. In the first and second embodiments, the system is explained for transmitting the viewing state information each time when the channel is selected (changed) . In the viewing state information, the channel identification information viewed by the portable terminal and the viewing start time are related. However, employing the configuration in the first and second embodiments may result in the possibility of the increase in the traffic and disable the effective communication.

In this third embodiment, the configuration is explained for storing the viewing state information in the memory unit 135 even in the case of the channel change. In this configuration, when the accumulated viewing state information exceeds a certain amount, the accumulated viewing state information together with the terminal identification information are transmitted. Incidentally, the same numerals are given to the elements similar to those of the first embodiment, and their detailed explanations are omitted. Also, it is basically similar to the configuration of the first embodiment. Thus, the explanation is focused on the point different from the first embodiment.

The control unit 130 judges whether or not the viewing state information of a predetermined amount is stored in the memory unit 135, when the generated viewing state information is stored in the memory unit 135, in addition to the functions explained in the first embodiment. If judging to reach the predetermined amount, the control unit 130 transmits all of the viewing state information stored in the memory unit 135 together with the terminal identification information through the wireless communication unit 110.

The operations in this embodiment will be described below.

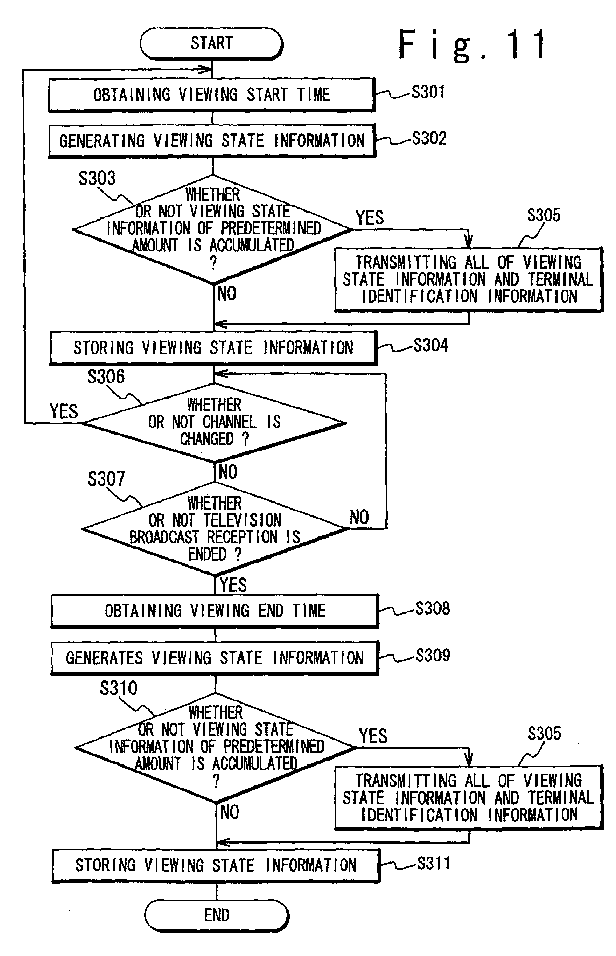

Fig. 11 is a flowchart showing the operation executed by the portable terminal 100 in the third embodiment.

When the application for the television broadcast reception is started, the control unit 130 obtains the current time information as the viewing start time from the clock 134 (Step S301).

The control unit 130, when obtaining the viewing start time, generates the viewing state information from the channel identification information being viewed and the viewing start time (Step S302).

The control unit 130, when storing the generated viewing state information in the memory unit 135, judges whether or not the viewing state information of the predetermined amount is accumulated in the memory unit 135 (Step S303). That is, the control unit 130 judges whether or not the amount of the viewing state information accumulated in the memory unit 135 exceeds the predetermined amount.

The control unit 130, if judging that the viewing state information of the predetermined amount is not accumulated in the memory unit 135, stores the viewing state information in the memory unit 135 (Step S304).

On the one hand, the control unit 130, if judging that the viewing state information of the predetermined amount is accumulated in the memory unit 135, transmits all of the viewing state information and the terminal identification information through the wireless communication unit 110 to the communication common carrier system 200 (Step S305). After the transmission, the control unit 130 carries out the process of the step S304.

Next, the control unit 130 recognizes whether or not the channel is changed (Step S306). Here, if the change of the channel is recognized, the operation flow returns to the step S301.

On the one hand, if the change of the channel is not recognized, the control unit 130 recognizes whether or not the television broadcast reception is ended (Step S307). Here, if the end of the television broadcast reception is not recognized, the operation flow returns to the step S305.

On the other hand, if the end of the television broadcast reception is recognized, the control unit 130 obtains the current time information as the viewing end time from the clock 134 (Step S308). If obtaining the viewing end time, the control unit 130 generates the viewing state information from the identification information indicating the viewing end and the viewing end time (Step S309).

The control unit 130, when the generated viewing state information stored in the memory unit 135 is stored, judges whether or not the viewing state information of the predetermined amount is accumulated in the memory unit 135 (Step S310).

The control unit 130, if judging that the viewing state information of the predetermined amount is not accumulated in the memory unit 135, stores the viewing state information in the memory unit 135 (Step S311).

On the other hand, the control unit 130, if judging that the viewing state information of the predetermined amount is accumulated in the memory unit 135, transmits all of the viewing state information and the terminal identification information through the wireless communication unit 110 to the communication common carrier system 200 (Step S312). After the transmission, the control unit 130 carries out the process of the step S304.

Next, the operation for generating the viewing analysis information carried out by the communication common carrier system 200 will be explained.

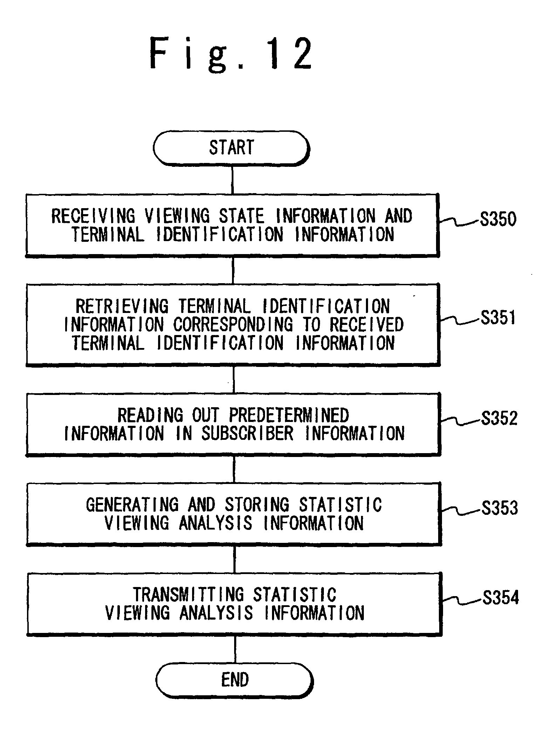

Fig. 12 is a flowchart showing the operation executed by the communication common carrier system 200 in the third embodiment.

The portable terminal 100 transmits the viewing state information and terminal identification information to the service control station 240. The service control station 240 receives the viewing state information and terminal identification information through the mobile communication network (Step S350).

When the service control station 240 receives the viewing state information and the terminal identification 5 information, the audience rating analyzing unit 243 retrieves the terminal identification information corresponding to the received terminal identification information, from the subscriber information database 241 (Step S351).

When retrieving the terminal identification information from the subscriber information database 241, the audience rating analyzing unit 243 reads out the residence territory, age, gender and occupation of the portable terminal subscriber, which are stored in relation to this terminal identification information (Step S352).

The audience rating analyzing unit 243 makes the read-out residence territory, age, gender and occupation of the portable terminal subscriber be related to the received viewing state information to generate the statistic viewing analysis information. The audience rating analyzing unit 243 stores the statistic viewing analysis information in the memory 245 (Step S353).

The service control station 240 transmits the statistic viewing analysis information stored in the memory 245 through the communication unit 244 to the broadcasting company system 300 (Step S354).

According to the above-mentioned configuration, since the viewing state information is collectively transmitted, the viewing state information can be transmitted without any influence on the effective communication.

### [Fourth Embodiment]

The fourth embodiment in the present invention will be described below with reference to attached drawings.

In the above third embodiment, the configuration is explained for transmitting all of the viewing state information stored in the memory unit 135 and the terminal identification information, when the viewing state information stored in the memory unit 135 exceeds the certain amount.

In this embodiment, the configuration is explained in which the portable terminal 100, when receiving the signal indicative of the transmission of the viewing state information, transmits the terminal identification information, all of the viewing state information and the viewing end time which are stored in the memory unit 135. Incidentally, the same numerals are given to the elements similar to those of the third embodiment, and their detailed explanations are omitted.

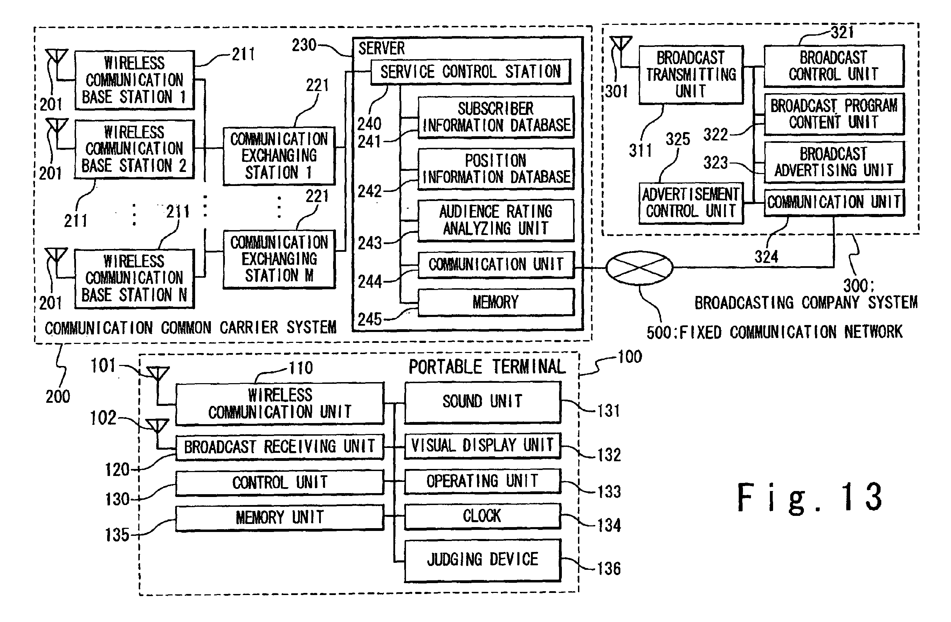

Fig. 13 is view showing a configuration of the viewing information collecting system in fourth embodiment.

Since this is basically similar to the configuration of the third embodiment, the explanation is focused on the point different from the third embodiment.

The point different from the third embodiment lies in the configuration that the portable terminal 100 has a judging device 136, in addition to the above-mentioned configuration of the third embodiment.

The judging device 136 judges whether or not the signal received by the wireless communication unit 110 includes the information transmission signal indicating the transmission of the viewing state information. Moreover, the judging device 136, if judging that there is the information transmission signal, requests the control unit 130 to transmit the viewing state information and the terminal identification information.

The operations of this embodiment will be described below. Incidentally, since the operations executed in the communication common carrier system 200 are equal to those of the third embodiment, their explanations are omitted.

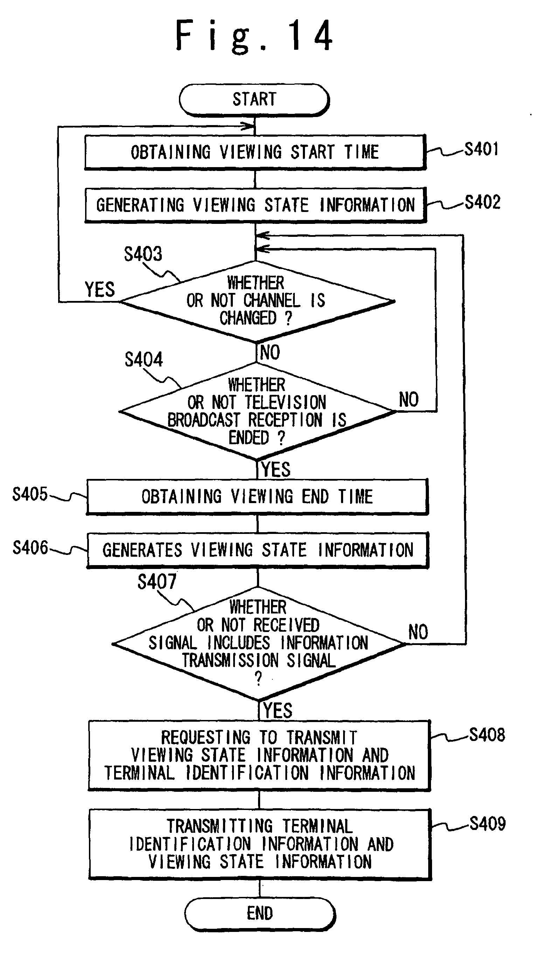

Fig. 14 is a flowchart showing the operation executed by the portable terminal 100 in the fourth embodiment.

When the application for the television broadcast reception is started, the control unit 130 obtains the current time information as the viewing start time from the clock 134 (Step S401).

The control unit 130, when obtaining the viewing start time, generates the viewing state information composed of the channel identification information being viewed and the viewing start time. The control unit 130 stores the viewing state information in the memory unit 135 (Step S402).

Next, the control unit 130 recognizes whether or not the channel is changed (Step S403). Here, if the change of the channel is recognized, the operation flow returns to the step S401.

On the one hand, if the change of the channel is not recognized, the control unit 130 recognizes whether or not the television broadcast reception is ended (Step S404). Here, if the end of the television broadcast reception is not recognized, the operation flow returns to the step S403.

If the end of the television broadcast reception is recognized, the control unit 130 obtains the current time information from the clock 134 as the viewing end time (Step S405). After obtaining the viewing end time, the control unit 130 generates the viewing state information from the identification information indicating the viewing end and the viewing end time. Then, the control unit 130 stores the viewing state information in the memory unit 135 (Step S406).

The judging device 136 judges whether not the signal received by the wireless communication unit 110 includes the information transmission signal indicating the transmission of the viewing state information (Step S407).

If the judging device 136 judges that the signal received by the wireless communication unit 110 does not include the information transmission signal, the operation flow returns to the step S403. The judging device 136, if judging that the signal received by the wireless communication unit 110 includes the information transmission signal, requests the control unit 130 to transmit the viewing state information and the terminal identification information (Step S408).

The control unit 130, when receiving the transmission request of the viewing state information and terminal identification information, transmits the terminal identification information and the viewing state information accumulated in the memory unit 135, through the wireless communication unit 110 to the communication common carrier system 200 (Step S409).

Due to the above-mentioned configuration, since the viewing state information is collectively transmitted, the viewing state information can be transmitted without any influence on the effective communication.

Incidentally, in this embodiment, the configuration is noted for transmitting all of the viewing state information stored in the memory unit 135, when the portable terminal 100 receives the information transmission signal of the viewing state information. However, it is not limited thereto. That is, the configuration such as the third embodiment may be designed such that the control unit 130 recognizes whether or not the viewing state information stored in the memory unit 135 exceeds the certain amount, and if the viewing state information stored in the memory unit 135 exceeds the certain amount before the reception of the information transmission signal of the viewing state information, all of the viewing state information stored in the memory unit 135 is transmitted.

### [Fifth Embodiment]

The fifth embodiment in the present invention will be described below with reference to attached drawings.

In the fourth embodiment, the configuration is explained for transmitting the terminal identification information and all of the viewing state information stored in the memory unit 135, when the portable terminal 100 receives the information transmission signal.

In this embodiment, the configuration is explained in which the portable terminal 100 receives the information transmission signal including the information to specify the time when the viewing state information and the terminal identification information are transmitted, and transmits the terminal identification information and all of the viewing state information stored in the memory unit 135 at the transmission specification time. Incidentally, the same numerals are given to the elements similar to the above-mentioned embodiments, and their detailed explanations are omitted.

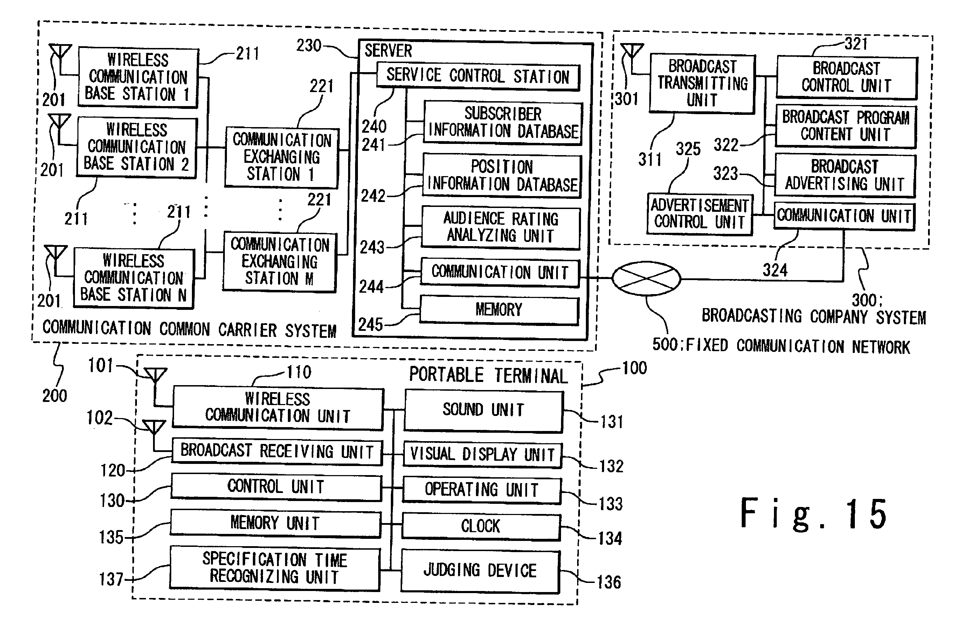

Fig. 15 is a view showing the configuration of the viewing information collecting system in the fifth embodiment.

Since this is basically similar to the configuration of the fourth embodiment, the explanation is focused on the different from the third embodiment.

The point different from the fourth embodiment lies in the configuration that the portable terminal 100 has a specification time recognizing unit 137, in addition to the configuration of the third embodiment as mentioned above.

The specification time recognizing unit 137, if the judging device 136 judges the reception of the information transmission signal, extracts and stores a transmission time specification information from the received information transmission signal. The transmission time specification information is the information to specify the time of the transmission of the viewing state information and terminal identification information. Moreover, on the transmission specification time, the specification time recognizing unit 137 requests the control unit 130 to transmit the viewing state information and the terminal identification information.

The operations in this embodiment will be described below. Incidentally, the operations executed in the communication common carrier system 200 are equal to those of the third and fourth embodiments. Thus, their explanations are omitted.

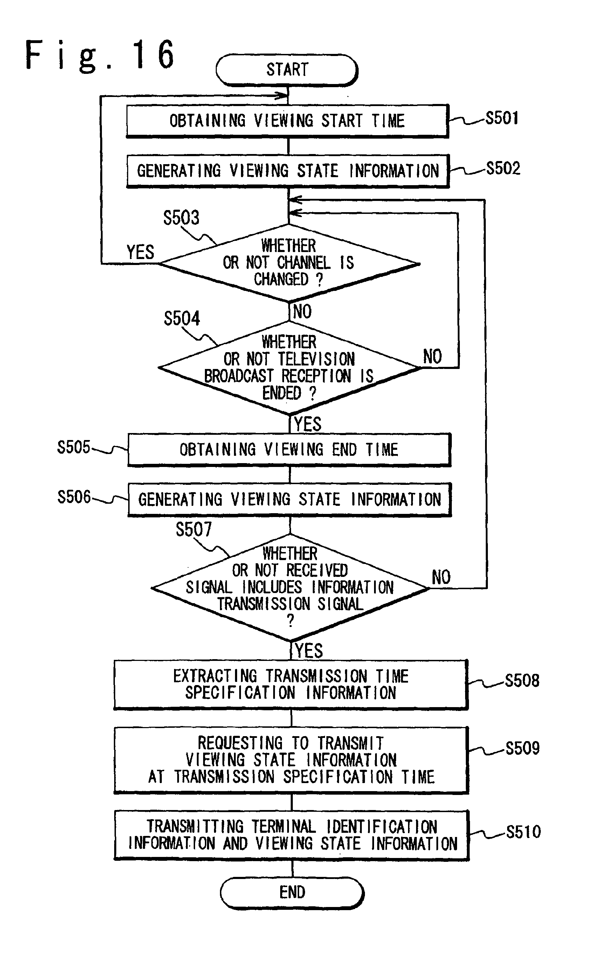

Fig. 16 is a flowchart showing the operation executed by the portable terminal 100 in the fifth embodiment.

When the application for the television broadcast reception is started, the control unit 130 obtains the current time information as the viewing start time from the clock 134 (Step S501).

The control unit 130, when obtaining the viewing start time, generates the viewing state information composed of the channel identification information being viewed and the viewing start time. The control unit 130 stores the viewing state information in the memory unit 135 (Step S502).

Next, the control unit 130 recognizes whether or not the channel is changed (Step S503). Here, if the change of the channel is recognized, the operation flow returns to the step S501.

On the one hand, if the change of the channel is not recognized, the control unit 130 recognizes whether or not the television broadcast reception is ended (Step S504). Here, if the end of the television broadcast reception is not recognized, the operation flow returns to the step S503.

If the end of the television broadcast reception is recognized, the control unit 130 obtains the current time information from the clock 134 as the viewing end time (Step S505). After obtaining the viewing end time, the control unit 130 generates the viewing state information from the identification information indicating the viewing end and the viewing end time. Then, the control unit 130 stores the viewing state information in the memory unit 135 (Step S506).

The judging device 136 judges whether or not the signal received by the wireless communication unit 110 includes the information transmission signal indicating the transmission of the viewing state information and the terminal identification information (Step S507).

If the judging device 136 judges that the signal received by the wireless communication unit 110 does not include the information transmission signal, the operation flow returns to the step S503.

If the judging device 136 judges that the signal received by the wireless communication unit 110 includes the information transmission signal, the specification time recognizing unit 137 extracts the transmission time specification information from the received information transmission signal. Here, the transmission time specification information is a information to specify the time when the viewing state information and the terminal identification information are transmitted. The specification time recognizing unit 137 stores the transmission time specification information in the memory unit 135 (Step S508).

Then, the specification time recognizing unit 137 requests the control unit 130 to transmit the viewing state information at the arrival of the transmission specification time (Step S509).

The control unit 130, when receiving the transmission request of the viewing state information, transmits the terminal identification information and the viewing state information accumulated in the memory unit 135, through the wireless communication unit 110 to the communication common carrier system 200 (Step S510).

Due to the above-mentioned configuration, since the viewing state information is collectively transmitted, the viewing state information can be transmitted without any influence on the effective communication.

Incidentally, in this embodiment, the configuration is noted for transmitting the viewing state information at the transmission specification time. However, this is not limited thereto. That is, the configuration such as the third embodiment may be designed such that the control unit 130 recognizes whether or not the viewing state information stored in the memory unit 135 exceeds the certain amount, and it may be transmitted even if the viewing state information stored in the memory unit 135 exceeds the certain amount before the transmission specification time.

### [Sixth Embodiment]

The sixth embodiment in the present invention will be described below with reference to attached drawings.

The residence territory of the real time viewing analysis information or the statistic viewing analysis information in the first embodiment is the information registered in subscribing to the communication service of the portable terminal 100. This does not provide the information with regard to the location where the portable terminal 100 views the television broadcast.

In this embodiment, the system is explained for providing the real time viewing analysis information including the information with regard to the location where the portable terminal 100 views the television broadcast. Incidentally, the same numerals are given to the elements similar to those of the first embodiment, and their detailed explanations are omitted.

Since this is basically similar to the configuration of the first embodiment, Fig. 1 is used as the view showing the configuration, and the explanation is focused on the point different from the first embodiment.

In addition to the functions noted in the first embodiment, based on the received terminal identification information, the audience rating analyzing unit 243 retrieves the position information corresponding to that terminal identification information from the position information database 242. Moreover, this relates the retrieved position information, the information read out from the subscriber information and the received viewing state information, and generats and stores the real time viewing analysis information. Also, this generates the statistic viewing analysis information based on the real time viewing analysis information.

The operations in this embodiment will be described below. Incidentally, the operation for generating and transmitting the viewing state information which is executed in the portable terminal 100 is omitted because it is equal to that of the first embodiment.

At first, the process in which the portable terminal 100 registers (updates) the self-position in the position information database 242 is explained.

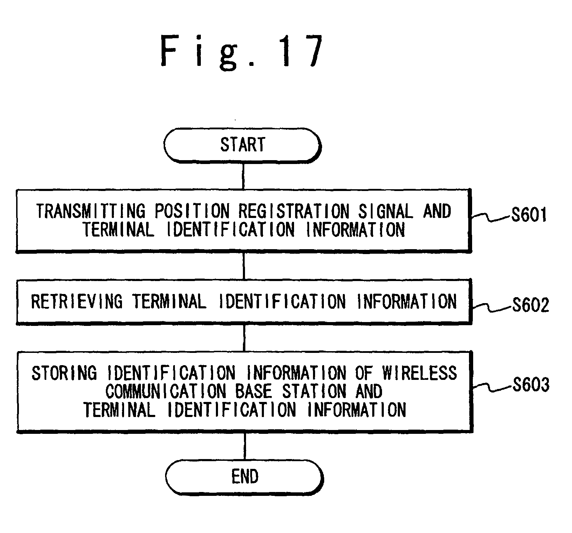

Fig. 17 is a flowchart showing the operation for the position registration in the sixth embodiment.

The portable terminal 100 transmits a position registration signal to carry out the position registration, together with the terminal identification information, to the wireless communication base station 211 (Step S601)*.* The service control station 240 retrieves the appropriate terminal identification information based on the terminal identification information received by the wireless communication base station 211 (Step S602). When retrieving the terminal identification information, the service control station 240 relates the identification information of the wireless communication base station 211 receiving the position registration signal, to the retrieved terminal identification information. Then, the service control station 240 stores them in the position information database 242 (Step S603).

Next, the operation for preparing the real time viewing analysis information is explained which is executed in the communication common carrier system 200.

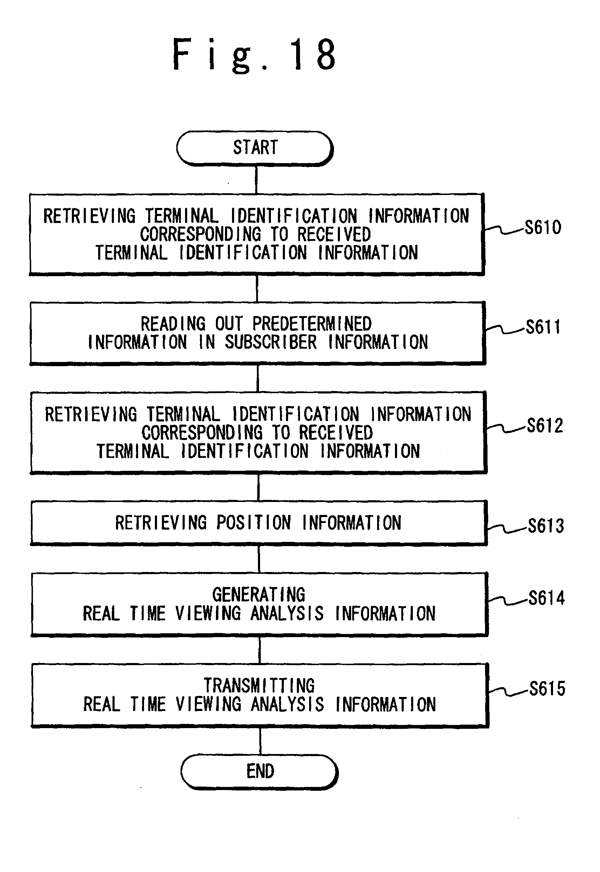

Fig. 18 is a flowchart showing the operation executed by the communication common carrier system 200 in the sixth embodiment.

When the service control station 240 receives the viewing state information and the terminal identification information, the audience rating analyzing unit 243 retrieves the terminal identification information corresponding to the received terminal identification information from the subscriber information database 241 (Step S610).

When retrieving the terminal identification information from the subscriber information database 241, the audience rating analyzing unit 243 reads out the residence territory, age, gender and occupation of the portable terminal subscriber, which are stored in relation to this terminal identification information (Step S611).

Also, the audience rating analyzing unit 243 retrieves the terminal identification information corresponding to the received terminal identification information from the position information database 242 (Step S612).

When retrieving the terminal identification information from the position information database 242, the audience rating analyzing unit 243 retrieves the position information stored in relation to this terminal identification information (Step S613).

The audience rating analyzing unit 243 makes the read-out residence territory, age, gender and occupation of the portable terminal subscriber, the retrieved position information, and the received viewing state information be related to generate the real time viewing analysis information. The audience rating analyzing unit 243 stores the real time viewing analysis information in the memory 245 (Step S614).

The service control station 240 transmits the real time viewing analysis information stored in the memory 245 through the communication unit 244 to the broadcasting company system 300 (Step S615).

In the above-mentioned this embodiment, the configuration is explained for detecting the position of the portable telephone in the cellular system and generating the position information. However, the configuration for using GPS (Global Positioning System) and generating the position information may be considered as the variation. In this case, the portable terminal 100 has a GPS information obtaining unit for obtaining a self-current position by receiving an electric wave from GPS satellites in addition to the above-mentioned configuration. The control unit 130 transmits the position information obtained by this GPS information obtaining unit together with the viewing state information and the terminal identification information. The service control station 240, when receiving the position information obtained by the GPS information obtaining unit together with the viewing state information and the terminal identification information, retrieves the appropriate terminal identification information, based on the received terminal identification information, and relates to the received position information and stores therein.

In the case of the configuration of using the GPS as mentioned above, the precision of the position information can be increased.

In the above-mentioned configuration, the viewing state information also includes the position information. Thus, whether the television program of a key station is viewed or the television program of a local station is viewed can be known, thereby increasing the precision of the viewing analysis information.

Incidentally, this embodiment is explained as the configuration added to the first embodiment. However, this is not limited thereto. That is, this may be the configuration added to the second embodiment.

Also, this embodiment is configured such that with the terminal identification information as the key cord, the position information of the position information database and the subscriber information of the subscriber information database are related. However, this is not limited thereto. That is, the terminal identification information, the position information and the subscriber information may be related to each other, and the two databases may be integrated into one unit.

### [Seventh Embodiment]

The seventh embodiment in the present invention will be described below with reference to attached drawings.

In the first to sixth embodiments, the configuration is explained for providing the real time viewing analysis information or the statistic viewing analysis information to the broadcasting company system 300.

In this embodiment, the case is explained in which if the user cooperates with the audience rating analysis, the communication charge (the call fee) is discounted correspondingly to the cooperation time (viewing time). Incidentally, the same numerals are given to the elements similar to those of the first embodiment, and their detailed explanations are omitted.

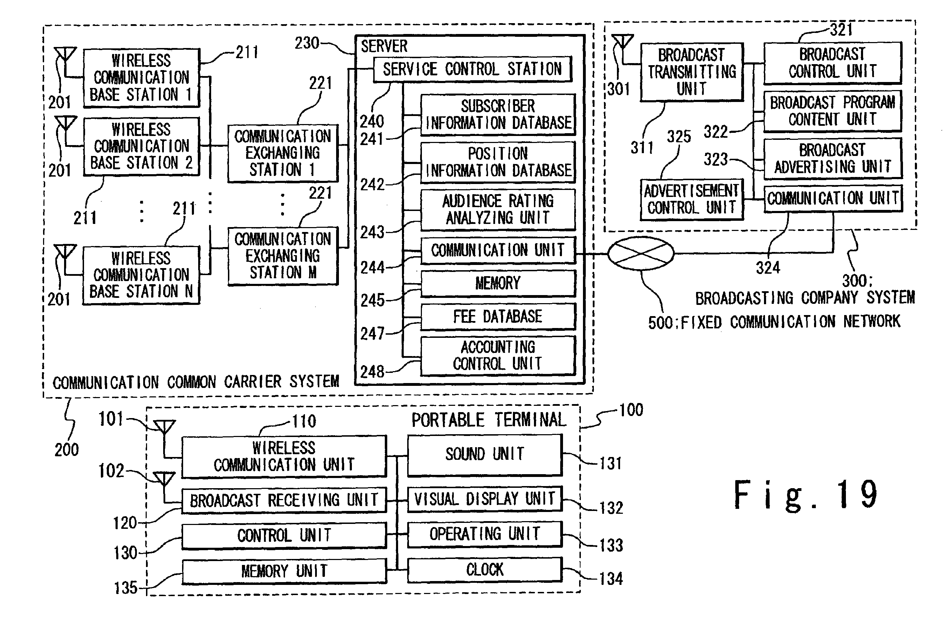

Fig. 19 is a view showing a configuration of the viewing information collecting system in seventh embodiment.

Since this is basically similar to the configuration of the first embodiment, the explanation is focused on the point different from the first embodiment.

The point different from the first embodiment lies in the configuration that the communication common carrier system 200 includes a fee database 247 and an accounting control unit 248, in addition to the configuration of the first embodiment as mentioned above. Also, the storing process executed by the control unit 130 of the portable terminal 100 and the viewing state information stored in the memory unit 135 are different.

The control unit 130, when the application for the television broadcast reception is started and the channel is selected by the operating unit 133, obtains the current time information as the viewing start time. Then, the control unit 130 relates the viewing start time to the channel identification information, and then stores them in the memory unit 135. Moreover, when the channel is changed or when the television broadcast reception is ended, the control unit 130 obtains the time information as the viewing end time and calculates the viewing time from the viewing start time and the viewing end time. Then, the control unit 130 relates the viewing time to the channel identification information and the viewing start time stored in the memory unit 135, and generates the viewing state information. Incidentally, in this embodiment, the viewing time is calculated from the viewing end time and the viewing start time. However, a timer may be installed in the portable terminal 100 to measure the time from the viewing start time to the viewing end time.

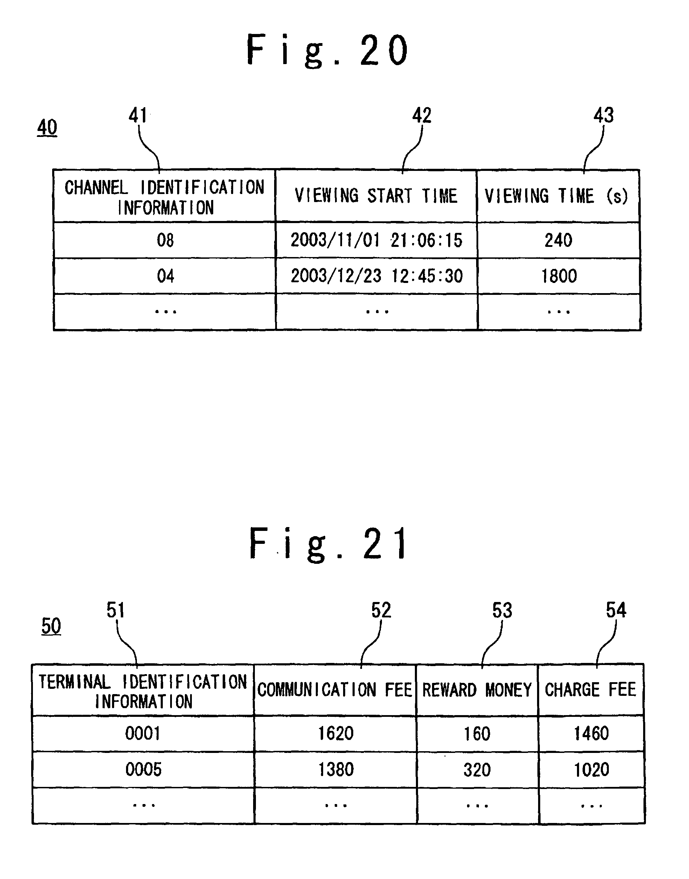

The memory unit 135 stores the viewing state information. Fig. 20 is a table showing the viewing state information. In this viewing state information 40, one record is composed of the channel identification information 41, the viewing start time 42 and the viewing time 43. The channel identification information 41 is the identification information to identify the channel viewed by the portable terminal 100. The viewing start time 42 is the time when the displaying of that channel is started in the portable terminal 100. The viewing time 43 is the time while that channel is displayed in the portable terminal 100. Incidentally, the viewing time is used in this embodiment. However, this is not limited thereto. That is, the viewing end time when the viewing is ended may be used. In this case, a device for calculating the viewing time based on the viewing start time and the viewing end time is installed in the communication common carrier system 200.

The fee database 247 manages the communication fee of the subscriber. Fig. 21 is a table showing the contents of the fee database 247. One record of the fee data 50 is composed of the terminal identification information 51, the communication fee 52, a reward money 53 and a charge fee 54, which are related to each other.

The terminal identification information is the terminal identification information given to the portable terminal 100 and equal to the terminal identification information mentioned in the other embodiments.

The communication fee 52 is the charge for the communication line, which corresponds to usage of the communication line by a contract subscriber. The reward money 53 is the reward money calculated based on the time while the user cooperates with the viewing analysis. The charge money 54 is the charge which is finally charged for the contract subscriber.

The accounting control unit 248 calculates the communication fee 52 each time when the contract subscriber uses the communication line, accumulates and stores it. Also, the accounting control unit 248 calculates the reward money 53 based on the time of cooperating with the viewing analysis, accumulates and stores it. Moreover, the accounting control unit 248 calculates the charge fee 54 to the contract subscriber from the communication fee 52 and the reward money 53 and stores it.

The operations in this embodiment will be described below. At first, the operation for preparing the viewing information is explained.

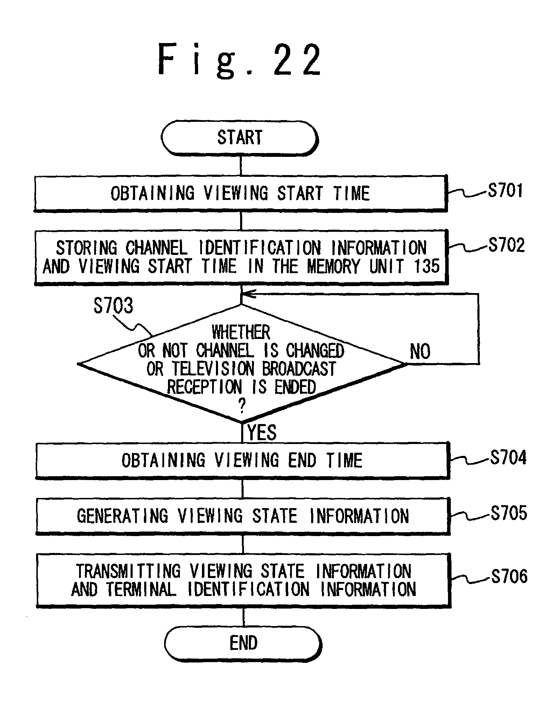

Fig. 22 is a flowchart showing the operation executed by the portable terminal 100 in the seventh embodiment.

When the application for the television broadcast reception is started, the control unit 130 obtains the current time information as the viewing start time from the clock 134 (Step S701).

The control unit 130, when obtaining the viewing start time, stores the channel identification information being viewed and the viewing start time in the memory unit 135 (Step S702).

Next, the control unit 130 recognizes whether or not the channel is changed or the television broadcast reception is ended (Step S703).

If the change of the channel is recognized or the television broadcast reception is ended, the control unit 130 obtains the time information as the viewing end time, and calculates the viewing time from the viewing start time and the viewing end time (Step S704). Then, the control unit 130 generates the viewing state information from the calculated viewing time, the channel identification information viewed and the viewing start time, and stored in the memory unit 135 (Step S705).

The control unit 130 transmits the generated viewing state information together with the terminal identification information through the wireless communication unit 110 to the communication common carrier system 200 (Step S706).

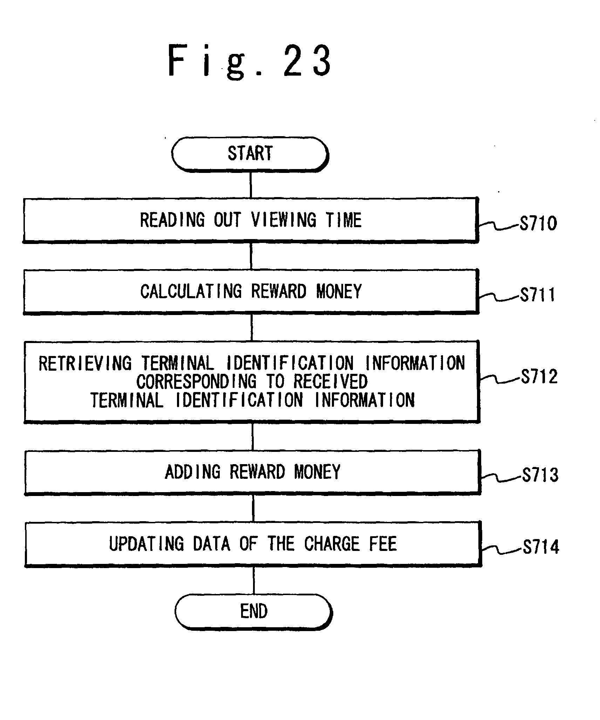

Next, the operation for discounting the communication charge on the basis of the cooperation time will be explained. Fig. 23 is a flowchart showing the operation executed by the communication common carrier system 200 in the seventh embodiment.

When the service control station 240 receives the viewing state information and the terminal identification information, the accounting control unit 248 reads out the viewing time of the viewing state information (Step S710).

The accounting control unit 248 calculates the reward money based on the read-out viewing time (Step S711).

The accounting control unit 248 retrieves the terminal identification information corresponding to the received terminal identification information from the fee database 247, based on the received terminal identification information (Step S712).

The accounting control unit 248 adds the calculated reward money to the reward money related to the retrieved terminal identification information (Step S713).

The accounting control unit 248 calculates the charge fee from the added reward money and the communication fee and updates the data of the charge fee (Step S714).

The employment of the above-mentioned configuration enables the reduction in the communication fee of the portable terminal subscriber.

Incidentally, the viewing state information in this embodiment is explained as for the case in which one record is composed of the channel identification information, the viewing start time and the viewing time. However, as described in the first embodiment, one record may be composed of the channel identification information and the viewing time. In this case, the accounting control unit 248 is configured such that when receiving the viewing state information, the accounting control unit 248 reads out the viewing state information received immediately prior to the viewing state information just received, and then recognizes whether that channel identification information stores the identification information of the viewed channel or stores the identification information indicating the end of the television broadcast reception, and if recognizing that the identification information of the viewed channel is stored, the accounting control unit 248 calculates the viewing time from the mutual viewing times.

Also, this embodiment is explained as the configuration added to the first embodiment. However, this is not limited thereto. That is, this may be the configuration added to the second to sixth embodiments.

The first to seventh embodiments are explained by using the television broadcast. However, they are not limited thereto. That is, it may be the radio broadcast, the Internet or the like.

Also, the first to seventh embodiments are explained by using the portable terminal. However, it may use PDA (Personal Digital Assistant) in which the communicating function and the function of receiving the television broadcast are installed instead of the portable terminal.

Moreover, the viewing state information of the first to seventh embodiments as mentioned above is composed of the channel identification information of the television broadcast viewed by the portable terminal 100 and the viewed time information. However, in the case of the information that enables the program or advertisement viewed by the portable terminal 100 to be identified, this is not limited thereto.

According to the present invention, the viewing information of the content viewed by the portable terminal is stored in the memory of the portable terminal. Thus, viewing information can be accurately collected.

Also, according to the present invention, the personal information and the viewing history data are held in the communication common carrier. Thus, it is possible to reduce the labor and management cost to manage the personal information and the viewing history data.

Moreover, according to the present invention, the person information and the viewing history data are held in the same service provider. Thus, it is possible to reduce the labor and cost of the communication required to prepare the viewing history data.

Moreover, according to the present invention, the person information and the viewing history data are held in the same service provider, and the person information is not transferred to the exterior. Thus, the external leakage of the person information can be avoided, thereby increasing the security effect.

## Claims

1. A viewing information collecting system comprising:
a portable terminal (100); and .
a viewing information collecting server (230),
wherein said portable terminal (100) includes:
a memory unit (135) which stores first terminal identification information identifying said portable terminal (100),
a viewing unit (120,131,132) which receives content of a broadcast program as viewing content and outputs said viewing content to be viewed,
a control unit (130) which generates first viewing state information indicating a state that said viewing content is viewed, and
a first communication unit (110) which transmits said first viewing state information and said first terminal identification information to said viewing information collecting server (230),
wherein said viewing information collecting server (230) includes:
a second communication unit (244) which receives said first viewing state information and said first terminal identification information from said portable terminal (100),
a subscriber database (241) which relates a plurality of subscriber information to a plurality of terminal identification information identifying a plurality of portable terminals, and
an analysis unit (243) which retrieves first subscriber information corresponding to said first terminal identification information from said subscriber database (241), reads out predetermined first information in said first subscriber information and generates viewing analysis information in which said first information is related to said first viewing state information.

2. The viewing information collecting system according to claim 1, wherein said first viewing state information includes content identification information identifying said viewing content.

3. The viewing information collecting system according to claim 2, wherein said first viewing state information further includes viewing time when said viewing content is outputted to be viewed.

4. The viewing information collecting system according to any of claims 1 to 3, wherein said viewing content includes one of a television broadcast program, a radio broadcast program and a broadcast program in the Internet.

5. A viewing information collecting server comprising:
a communication unit (244) which receives first viewing state information and first terminal identification information from a first portable terminal (100), wherein said first viewing state information indicates a state that viewing content is outputted by said first portable terminal (100) to be viewed, said viewing content is content of a broadcast program and is received by said first portable terminal (100), said first terminal identification information identifies said first portable terminal;
a subscriber database (241) which relates a plurality of subscriber information to a plurality of terminal identification information identifying a plurality of portable terminals; and
an analysis unit (243) which retrieves first subscriber information corresponding to said first terminal identification information from said subscriber database (241), reads out predetermined first information in said first subscriber information and generates viewing analysis information in which said first information is related to said first viewing state information.

6. The viewing information collecting server according to claim 5, wherein said first viewing state information includes content identification information identifying said viewing content.

7. The viewing information collecting server according to claim 6, wherein said first viewing state information further includes viewing time when said viewing content is outputted to be viewed.

8. The viewing information collecting server according to any of claims 5 to 7, wherein said analysis unit (243) judges whether or not said first viewing state information includes viewing time when said viewing content is outputted to be viewed, and if judging that said viewing time does not included, said analysis unit (243) generates said viewing analysis information in which said first information, said first viewing state information and receiving time are related to each other, said receiving time is time when said first viewing state information is received.

9. The viewing information collecting server according to any of claims 5 to 8, wherein said viewing content includes one of a television broadcast program, a radio broadcast program and a broadcast program in the Internet.

10. The viewing information collecting server according to any of claims 5 to 9, wherein said analysis unit includes:
a position information obtaining unit (243) which obtains position information indicating a position where said first portable terminal (100) outputs said viewing content to be viewed.

11. The viewing information collecting server according to claim 10, wherein said position information obtaining unit (243) which obtains said position information based on identification information of a base station (211), said base station (211) manages a communication in an area where said first portable terminal (100) exists.

12. The viewing information collecting server according to claim 10, wherein said position information obtaining unit (243) which obtains said position information based on second information transmitted from said first portable terminal (100), said second information indicates a position where said first portable terminal (100) exists.

13. The viewing information collecting server according to any of claims 5 to 12, further comprising:
a fee database (247) which stores communication fee information indicating a communication fee of said first portable terminal (100), and
an accounting control (248) unit which reduces said communication fee in said fee database (247) based on said first viewing state information.

14. A portable terminal comprising:
a memory unit (135) which stores first terminal identification information identifying said portable terminal (100);
a viewing unit (120, 131, 132) which receives content of a broadcast program as viewing content and outputs said viewing content to be viewed;
a control unit (130) which generates first viewing state information indicating a state that said viewing content is viewed; and
a communication unit (110) which transmits said first viewing state information and said first terminal identification information to a viewing information collecting server (230) of a communication carrier.

15. The portable terminal according to claim 14, wherein said first viewing state information includes content identification information identifying said viewing content.

16. The portable terminal according to claim 15, wherein said first viewing state information further includes viewing time when said viewing content is outputted to be viewed.

17. The portable terminal according to any of claims 14 to 16, wherein said viewing content includes one of a television broadcast program, a radio broadcast program and a broadcast program in the Internet.

18. The portable terminal according to any of claims 14 to 17, wherein said communication unit (110) transmits said first viewing state information and said first terminal identification to said viewing information collecting server (230), whenever said control unit generates said first viewing state information.

19. The portable terminal according to any of claims 14 to 17, wherein said communication unit (110) transmits said first viewing state information to said viewing information collecting server (230), every predetermined amount of said first viewing state information.

20. The portable terminal according to any of claims 14 to 17, wherein said communication unit (110) transmits said first viewing state information to said viewing information collecting server (230), in response to a transmission request signal of said first viewing state information outputted from said viewing information collecting server (230).

21. The portable terminal according to any of claims 14 to 17, wherein said communication unit (110) transmits said first viewing state information to said viewing information collecting server (230) at a predetermined time.

22. The portable terminal according to any of claims 14 to 17, further comprising:
a position obtaining unit which obtains position information indicating a position where said portable terminal exists,
wherein said communication unit (110) transmits said position information to said viewing information collecting server (230).

23. A method for collecting viewing information, comprising:
(a) outputting a viewing content to be viewed, by a first portable terminal (100), wherein said viewing content is content of a broadcast program and is received by said first portable terminal (100) ;
(b) generating first viewing state information indicating a state that said viewing content is viewed, by said first portable terminal (100);
(c) transmitting said first viewing state information and first terminal identification information to a viewing information collecting server (230), by said first portable terminal (100), wherein said first terminal identification information identifies said first portable terminal (100);
(d) receiving said first viewing state information and said first terminal identification information from said portable terminal (100), by said viewing information collecting server (230); and
(e) retrieving first subscriber information corresponding to said first terminal identification information from a subscriber database (241), reading out predetermined first information in said first subscriber information and generating viewing analysis information in which said first information is related to said first viewing state information, by said viewing information collecting server (230),
wherein said subscriber database (241) relates a plurality of subscriber information to a plurality of terminal identification information identifying a plurality of portable terminals.

24. The method for collecting viewing information according to claim 23, wherein said step (b) includes:
(b1) generating said first viewing state information such that said first viewing state information includes content identification information identifying said viewing content, by said first portable terminal (100).

25. The method for collecting viewing information according to claim 24, wherein said step (b) includes:
(b2) generating said first viewing state information such that said first viewing state information further includes viewing time when said viewing content is outputted to be viewed, by said first portable terminal (100).

26. The method for collecting viewing information according to any of claims 23 to 25, wherein said viewing content includes one of a television broadcast program, a radio broadcast program and a broadcast program in the Internet.

27. A method for operating a viewing information collecting server which is used for collecting viewing information, the method comprising:
(f) receiving first viewing state information and first terminal identification information from a first portable terminal (100), wherein said first viewing state information indicates a state that viewing content is outputted by said first portable terminal (100) to be viewed, said viewing content is content of a broadcast program and is received by said first portable terminal (100), said first terminal identification information identifies said first portable terminal (100);
(g) retrieving first subscriber information corresponding to said first terminal identification information from a subscriber database (241);
(h) reading out predetermined first information in said first subscriber information; and
(i) generating viewing analysis information in which said first information is related to said first viewing state information,
wherein said subscriber database (241) relates a plurality of subscriber information to a plurality of terminal identification information identifying a plurality of portable terminals.

28. The method for operating the viewing information collecting server according to claim 27, wherein said first viewing state information includes content identification information identifying said viewing content.

29. The method for operating the viewing information collecting server according to claim 28, wherein said first viewing state information further includes viewing time when said viewing content is outputted to be viewed.

30. The method for operating the viewing information collecting server according to any of claims 27 to 29, wherein said step (i) includes:
(i1) judging whether or not said first viewing state information includes viewing time when said viewing content is outputted to be viewed, and
(i2) generating said viewing analysis information in which said first information, said first viewing state information and receiving time are related to each other, if judging that said viewing time does not included in said first viewing state information,
wherein said receiving time is time when said first viewing state information is received.

31. The method for operating the viewing information collecting server according to any of claims 27 to 30, wherein said viewing content includes one of a television broadcast program, a radio broadcast program and a broadcast program in the Internet.

32. The method for operating the viewing information collecting server according to any of claims 27 to 31, wherein said step (i) includes:
(i3) obtaining position information indicating a position where said first portable terminal (100) outputs said viewing content to be viewed, and
(i4) generating said viewing analysis information in which said position information (100) is related to at least of said first information and said first viewing state information.

33. The method for operating the viewing information collecting server according to claim 32, wherein said step (i3) includes:
(i31) obtaining said position information based on identification information of a base station (211), said base station (211) manages a communication in an area where said first portable terminal (100) exists.

34. The method for operating the viewing information collecting server according to claim 32, wherein said step (i3) includes:
(i32) obtaining said position information based on second information transmitted from said first portable terminal (100), said second information indicates a position where said first portable terminal (100) exists.

35. The method for operating the viewing information collecting server according to any of claims 27 to 34, further comprising:
(j) reducing a communication fee in a fee database (247) based on said first viewing state information,
wherein said fee database (247) stores communication fee information indicating said communication fee of said first portable terminal (100).

36. A method for operating a portable terminal which is used for collecting viewing information, the method comprising:
(k) outputting a viewing content to be viewed, wherein said viewing content is received content of a broadcast program;
(1) generating first viewing state information indicating a state that said viewing content is viewed; and
(m) transmitting said first viewing state information and first terminal identification information to a viewing information collecting server (230) of a communication carrier, wherein said first terminal identification information identifying said portable terminal (100).

37. The method for operating the portable terminal according to claim 36, wherein said step (1) includes:
(11) obtaining content identification information from said viewing content to be included in said first viewing state information, wherein said content identification information identifies said viewing content.

38. The method for operating the portable terminal according to claim 37, wherein said step (1) includes:
(12) obtaining viewing time to be included in said first viewing state information, wherein said viewing time is time when said viewing content is outputted to be viewed.

39. The method for operating the portable terminal according to any of claims 36 to 38, wherein said viewing content includes one of a television broadcast program, a radio broadcast program and a broadcast program in the Internet.

40. The method for operating the portable terminal according to any of claims 36 to 39, wherein said step (m) includes:
(m1) transmitting said first viewing state information and said first terminal identification to said viewing information collecting server (230), whenever said first viewing state information is generated.

41. The method for operating the portable terminal according to any of claims 36 to 39, wherein said step (m) includes:
(m2) transmitting said first viewing state information to said viewing information collecting server (230), every predetermined amount of said first viewing state information.

42. The method for operating the portable terminal according to any of claims 36 to 39, wherein said step (m) includes:
(m3) transmitting said first viewing state information to said viewing information collecting server (230), in response to a transmission request signal of said first viewing state information outputted from said viewing information collecting server (230).

43. The method for operating the portable terminal according to any of claims 36 to 39, wherein said step (m) includes:
(m4) transmitting said first viewing state information to said viewing information collecting server (230) at a predetermined time.

44. The method for operating the portable terminal according to any of claims 36 to 39, wherein said step (m) includes:
(m5) obtaining position information indicating a position where said portable terminal (100) exists, and
(m6) transmitting said position information to said viewing information collecting server (230).

45. Computer program product with program code means for carrying out all steps according to any of claims 27 to 44 if the program runs on a computer.

46. Computer program product with program code means according to claim 45 which are stored on a storage means which can be read by the computer.
